# EUROPEAN PATENT SPECIFICATION

(11) **EP 4 400 817 B1**
(45) Date of publication and mention of the grant of the patent: **09.12.2026**
(21) Application number: 21959682.2
(22) Date of filing: 08.10.2021
(51) Int. Cl.: H04N 25/705, H04N 23/54, H04N 23/55, H04N 23/56

(54) **DETECTION SYSTEM, TERMINAL DEVICE, CONTROL DETECTION METHOD, AND CONTROL APPARATUS**
DETEKTIONSSYSTEM, ENDGERÄTEVORRICHTUNG, STEUERUNGSDETEKTIONSVERFAHREN UND STEUERUNGSVORRICHTUNG
SYSTÈME DE DÉTECTION, TERMINAL, PROCÉDÉ DE COMMANDE DE DÉTECTION ET APPAREIL DE COMMANDE

(43) Date of publication of application: 17.07.2024
(73) Proprietor: Yinwang Intelligent Technologies Co., Ltd., Shenzhen, Guangdong 518129 (CN)
(72) Inventor: WANG, Chao, Shenzhen, Guangdong 518129 (CN)
(74) Representative: Gill Jennings & Every LLP
(86) International application number: PCT/CN2021/122544
(87) International publication number: WO 2023/056585

(56) References cited:
- CN-A- 105 554 420
- CN-A- 105 789 261
- CN-A- 106 973 273
- CN-A- 111 787 248
- CN-A- 112 729 566
- CN-A- 112 729 566
- CN-A- 112 912 766
- DE-A1- 102019 209 697
- US-A1- 2005 061 951
- US-A1- 2017 187 936
- US-A1- 2020 116 558
- US-A1- 2021 011 169

## Description

### TECHNICAL FIELD

This application relates to the field of detection technologies, and in particular, to a detection system, a terminal device, a method for controlling detection, and a control apparatus.

### BACKGROUND

With development of science and technology, intelligent terminals such as intelligent transportation devices, smart home devices, robots, and vehicles are gradually entering people's life. A detection system plays an increasingly important role in an intelligent terminal. The detection system can sense an ambient environment, identify and track a moving target based on sensed environment information, identify a static scenario such as a lane line or a sign, and perform route planning and the like based on a navigator, map data, and the like. Therefore, the detection system plays an increasingly important role in the intelligent terminal.

An angular resolution is an important parameter used to characterize performance of the detection system. Currently, the following two manners are usually used to improve the angular resolution of the detection system. Manner 1: A focal length of an optical image-forming system in the detection system is increased. In this way, an overall size of the detection system is increased, which is not conducive to miniaturization of the detection system. Manner 2: A field angle of view of the detection system is reduced to increase the angular resolution of the detection system. In this way, reduction of the field angle of view of the detection system is caused, and an application scenario of the detection system is limited.

In conclusion, how to improve the angular resolution of the detection system without affecting other performance of the detection system is a technical problem that urgently needs to be resolved currently. DE102019209697A1 discloses a lidar receiver unit in a focal plane array arrangement, comprising a plurality of sensor elements for receiving light pulses of a lidar transmitting unit. US2021/011169A1 discloses an image sensor including a pixel array which includes pixels for sensing a reflected signal, incident on the pixel array to form reflected light spots separated from each other. CN112729566A discloses a detector imaging device comprising a physical pixel array formed by a plurality of physical pixel units, the physical pixel units comprising a circuit area and a light-sensitive area. US2020116558A1 discloses a multispectral sensor arrays and systems.

### SUMMARY

The claimed invention provides a detection system, a terminal device comprising the detection system, and a method for controlling detection, as defined in the appended claims.

According to a first aspect, this application provides a detection system in accordance with appended claim 1.

According to a second aspect, this application provides a method for controlling detection according to appended claim 9.

### BRIEF DESCRIPTION OF DRAWINGS

FIG. 1a is a schematic diagram of binning of light-sensing units according to this application;
FIG. 1b is a schematic diagram of a quantity of lines of a lidar according to this application;
FIG. 1c is a schematic diagram of a BSI principle according to this application;
FIG. 1d is a schematic diagram of an FSI principle according to this application;
FIG. 2a is a schematic diagram of a possible application scenario according to this application;
FIG. 2b is a schematic diagram of another possible application scenario according to this application;
FIG. 3 is a schematic diagram of a structure of a detection system according to this application;
FIG. 4 is a schematic diagram of a relationship between a light-sensing unit and a pixel according to this application;
FIG. 5a is a schematic diagram of a structure in which pixels are arranged in a staggered manner in a row direction according to this application;
FIG. 5b is a schematic diagram of a structure in which pixels are arranged in an aligned manner in a row direction according to this application;
FIG. 5c is a schematic diagram of a structure in which pixels are arranged in a staggered manner in a column direction according to this application;
FIG. 5d is a schematic diagram of a structure in which pixels are arranged in a column direction in an aligned manner according to this application;
FIG. 5e is a schematic diagram of another structure in which pixels are arranged in a staggered manner in a row direction according to this application;
FIG. 5f is a schematic diagram of another structure in which pixels are arranged in a staggered manner in a column direction according to this application;
FIG. 5g is a schematic diagram of a structure in which pixels are arranged in a staggered manner in a row direction according to this application;
FIG. 5h is a schematic diagram of another structure in which pixels are arranged in a staggered manner in a column direction according to this application;
FIG. 6a is a schematic diagram of a structure of a pixel array according to this application;
FIG. 6b is a schematic diagram of a structure of another pixel array according to this application;
FIG. 6c is a schematic diagram of a structure of still another pixel array according to this application;
FIG. 7 is a schematic diagram of a relationship between a first light source array and a first pixel array according to this application;
FIG. 8a is a schematic diagram of a structure of an optical lens according to this application;
FIG. 8b is a schematic diagram of a structure of another optical lens according to this application;
FIG. 9 is a schematic diagram of a structure of a terminal device according to this application;
FIG. 10 is a schematic diagram of a detection method according to this application;
FIG. 11 is a schematic diagram of a structure of a control apparatus according to this application; and
FIG. 12 is a schematic diagram of a structure of a control apparatus according to this application.

### DESCRIPTION OF EMBODIMENTS

The following describes in detail embodiments of this application with reference to accompanying drawings.

Some terms used in this application are explained below. It should be noted that these explanations are intended for ease of understanding by a person skilled in the art, but do not constitute a limitation on the protection scope claimed in this application.

### 1. Binning (also referred to as binning)

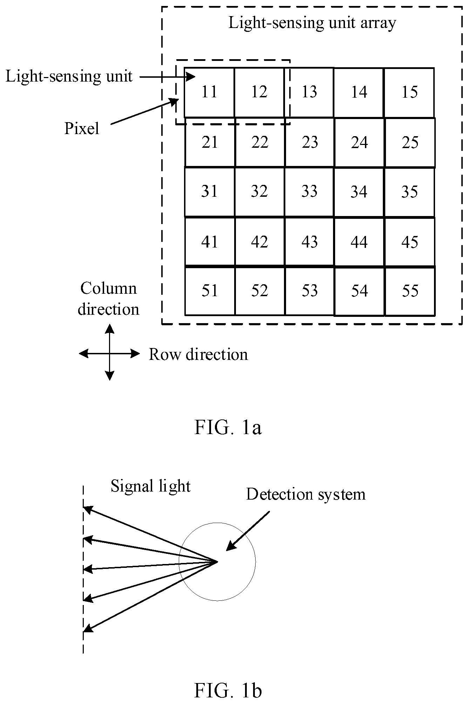

Binning is a reading manner. In this manner, signals (for example, photons) sensed by all light-sensing units in binned light-sensing units (or referred to as pixel cells) (cells) are added together and read in a manner of one pixel (Pixel). Binning can be classified into binning in a row direction and binning in a column direction. In the binning in a row direction, signals of adjacent rows are added and read in a manner of one pixel (refer to FIG. 1a below). In the binning in a column direction, signals of adjacent columns are added and read in a manner of one pixel. It can also be understood that a detection system may implement row-only binning, or column-only binning, or row-and-column binning. It should be understood that, a binning manner may alternatively be another possible manner, for example, binning in a diagonal direction. This is not limited in this application.

### 2. Quantity of lines of a detection system

The quantity of lines of a detection system is a quantity of signal lights transmitted by the detection system at one time. Different signal lights may be used to detect different locations in a detection region. Refer to FIG. 1b. A quantity of lines of a detection system is 5. It should be understood that the quantity of lines of the detection system may be greater than 5, or may be less than 5. 5 is used only as an example in FIG. 1b. This is not limited in this application.

### 3. Angular resolution

The angular resolution may also be referred to as a scanning resolution, and refers to a capability of a detection system to differentiate a minimum distance between two adjacent objects. A smaller angular resolution indicates a larger quantity of light spots that are emitted to a detection region, that is, a larger quantity of points that can be detected and that are of a target in the detection region, and a higher detection definition. The angular resolution includes a first angular resolution and a second angular resolution, where the first angular resolution is an angular resolution in a row direction, and the second angular resolution is an angular resolution in a column direction. The first angular resolution θ₁ may be represented by the following Formula 1, and the second angular resolution θ₂ may be represented by the following Formula 2. ${θ}_{1} = {a}_{1} {/ f}_{1}$ Formula 1 ${θ}_{2} = {a}_{2} {/ f}_{2}$ Formula 2

a₁ represents a side length that is of a pixel and that is in a row direction of a pixel array, a₂ represents a side length that is of a pixel and that is in a column direction of a pixel array, f₁ represents an equivalent focal length that is of an optical receiving system and that is in a row direction, and f₂ represents an equivalent focal length that is of an optical receiving system and that is in a column direction. It should be understood that a₁ and a₂ may be the same or may be different, and f₁ and f₂ may be the same or may be different. In other words, an angular resolution of a detection system is related to a size of a pixel in a pixel array at a receive end and a focal length of an optical receiving system. If the row direction is consistent with a horizontal direction, and the column direction is consistent with a vertical direction, an angular resolution in the horizontal direction may also be referred to as a first angular resolution, and an angular resolution in the vertical direction may also be referred to as a second angular resolution.

It should be noted that the angular resolution of the detection system is the same as a size of a minimum field of view of a pixel. Specifically, the first angular resolution of the detection system is the same as a minimum field of view in the row direction of the pixel, and the second angular resolution of the detection system is the same as a minimum field of view in the column direction of the pixel.

### 4. Spatial resolution

The spatial resolution refers to a maximum quantity of pixel (Pixel) used for image-forming on a detection module. Generally, the spatial resolution is measured by a product of a quantity of pixels in a row direction and a quantity of pixels in a column direction, that is, a spatial resolution=a quantity of pixels in a row direction×a quantity of pixels in a column direction.

It should be noted that, when a light-sensing region (or referred to as a target surface or a photosensitive surface) of the detection module is fixed, a spatial resolution is inversely correlated to a pixel size. That is, a smaller pixel size indicates a higher spatial resolution, and a larger pixel size indicates a lower spatial resolution.

### 5. Back side illumination (back side illumination, BSI)

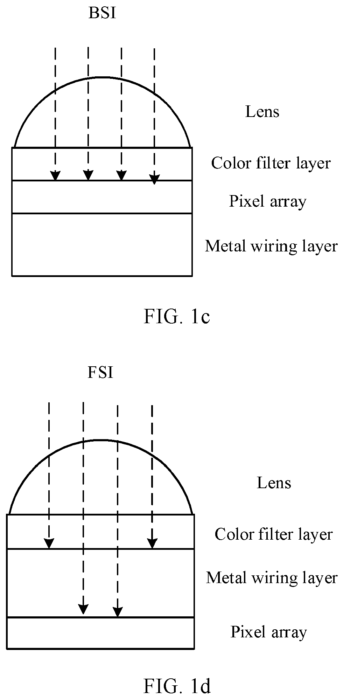

The BSI means that a light is incident from a back side into a pixel array. Refer to FIG. 1c. The light is focused on a color filter layer by a micro lens (micro lens) that includes an anti-reflective coating, and is divided into three primary color components by the color filter layer, and then directed to the pixel array. The back side is corresponding to a front end of line (front end of line, BEOL) process of a semiconductor manufacturing process.

### 6. Front side illumination (front side illumination, FSI)

The FSI means that a light is incident from a front side into a pixel array. Refer to FIG. 1d. Light is focused on a color filter layer by a micro lens (micro lens) that includes an anti-reflective coating, is divided into three primary color components by the color filter layer, and passes through a metal wiring layer, so that parallel lights are directed into the pixel array. The front side is corresponding to a back end of line (back end of line, BEOL) process of a semiconductor manufacturing process.

### 7. Gating a pixel and gating a light source

In a pixel array, a row address may be a horizontal coordinate, and a column address may be a vertical coordinate. In this application, an example in which a row of a pixel array is corresponding to a horizontal direction and a column of a pixel array is corresponding to a vertical direction is used for description. Data at a specified location in a memory may be read by using a row-column strobe signal, and a pixel corresponding to the read specified location is a gated pixel. It should be understood that a pixel in the pixel array may store a detected signal in a corresponding memory. For example, a bias voltage may be used to enable a pixel to be in an active (active) state, to respond to an echo signal that is incident to a surface of the pixel.

In a light source array, a row address may be a horizontal coordinate, and a column address may be a vertical coordinate. In this application, an example in which a row of a pixel array is corresponding to a horizontal direction and a column of a pixel array is corresponding to a vertical direction is used for description. Gating a light source refers to lighting up (or turning on) a light source, and controlling the light source to transmit a signal light at a corresponding power.

### 8. Point cloud (Point Cloud) information

The point cloud information is a set of points in a three-dimensional space. These vectors are generally represented in a form of X, Y, and Z three-dimensional coordinates, and are usually used to represent correlative information of a target. For example, (X, Y, Z) may represent a geometric position, intensity, a depth (that is, a distance), a segmentation result, and the like of the target.

Based on the foregoing content, the following provides a possible application scenario of a detection system in this application.

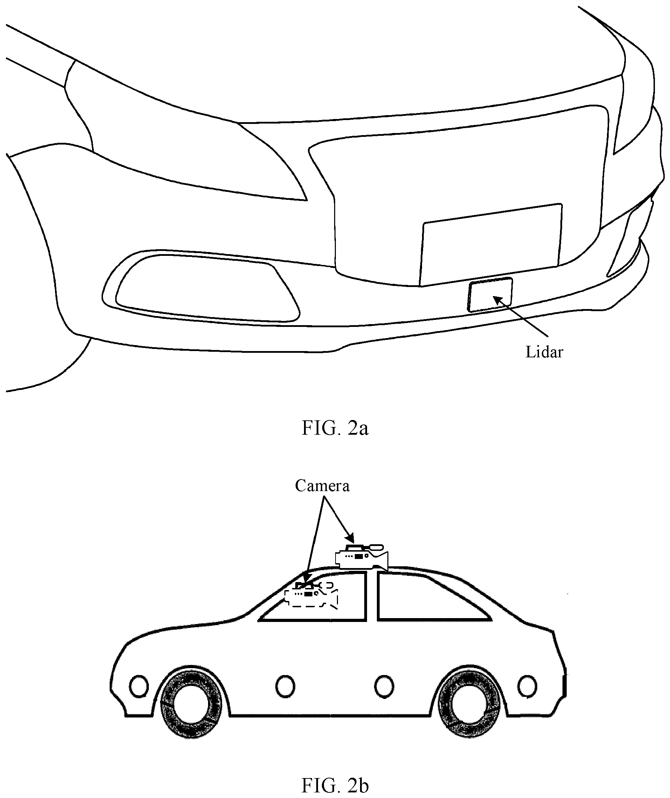

In a possible application scenario, the detection system may be a lidar. Refer to FIG. 2a, the lidar may be installed on a vehicle (for example, a self-driving vehicle, an intelligent vehicle, an electric vehicle, or a digital vehicle) as a vehicle-mounted lidar. The lidar may be deployed in any one or more directions of four directions: front, rear, left, and right of the vehicle, to capture information about an environment around the vehicle. FIG. 2a is an example in which the lidar is deployed in front of the vehicle. A region that can be sensed by the lidar may be referred to as a detection region of the lidar, and a corresponding field of view may be referred to as a full field of view. The lidar may obtain, in real time or periodically, a longitude and a latitude, a speed, and an orientation of the vehicle, or correlative information (for example, a distance of the target, a moving speed of the target, a posture of the target, or a grayscale image of the target) of a target (for example, another surrounding vehicle) in a specific range. The lidar or the vehicle may determine a location and/or path planning of the vehicle based on the correlative information. For example, a position of the vehicle is determined through the longitude and the latitude. Alternatively, a traveling direction and a destination of the vehicle in a future period of time are determined by using the speed and the orientation. Alternatively, a quantity of obstacles around the vehicle, density of the obstacles around the vehicle, and the like are determined by using the distance of the surrounding object. Further, optionally, assisted driving, autonomous driving, or the like of the vehicle may be implemented based on a function of an advanced driving assistance system (advanced driving assistance system, ADAS). It should be understood that a principle of detecting correlative information of a target by the lidar is as follows: The lidar transmits a signal light in a specific direction. If a target exists in a detection region of the lidar, the target may reflect the received signal light back to the lidar (a reflected signal light may be referred to as an echo signal), and then the lidar determines correlative information of the target based on the echo signal.

In another possible application scenario, the detection system may be a camera. The camera may alternatively be installed on a vehicle (for example, a self-driving vehicle, an intelligent vehicle, an electric vehicle, or a digital vehicle) as a vehicle-mounted camera. Refer to FIG. 2b. The camera can obtain measurement information such as a distance and a speed of an object in a detection region in real time or periodically to provide necessary information for operations such as lane correction, vehicle distance holding, and vehicle reversal. The vehicle-mounted camera can implement the following functions: (a) Object recognition and classification, such as lane line recognition, traffic light recognition, and traffic sign recognition; (b) Free space (Free Space) detection: For example, a safe boundary (drivable region) of a vehicle for driving may be divided, and a vehicle, an edge of a common road, an edge of a side stone, a boundary without a visible obstacle, an unknown boundary, and the like are divided; (c) Capability to detect laterally moving targets, such as a pedestrian and a vehicle passing through a crossroad; and (d) Localization and mapping, for example, localization and mapping based on a vision-based simultaneous localization and mapping (simultaneous localization and mapping, SLAM) technology; and the like.

It should be noted that the foregoing application scenario is merely an example, and the detection system provided in this application may be further applied to a plurality of other possible scenarios, but is not limited to the scenario shown in the foregoing example. For example, the lidar may alternatively be installed on an uncrewed aerial vehicle as an airborne radar. For another example, the lidar may alternatively be installed in a road side unit (road side unit, RSU), and may be used as a road side traffic lidar, to implement intelligent vehicle-road cooperative communication. For another example, the lidar may be installed on an automated guided transporter vehicle (automated guided vehicle, AGV). The AGV is a transporter vehicle equipped with an electromagnetic or optical automated navigation apparatus, or the like, capable of traveling along a specified navigation path, and having safety protection and various load-moving functions. This is not listed one by one herein. It should be understood that, the application scenarios described in this embodiment of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as a new application scenario emerges.

Based on the foregoing content, the application scenario may be applied to fields such as self driving, autonomous driving, assisted driving, intelligent driving, connected vehicles, security surveillance, remote interaction, mapping, or artificial intelligence.

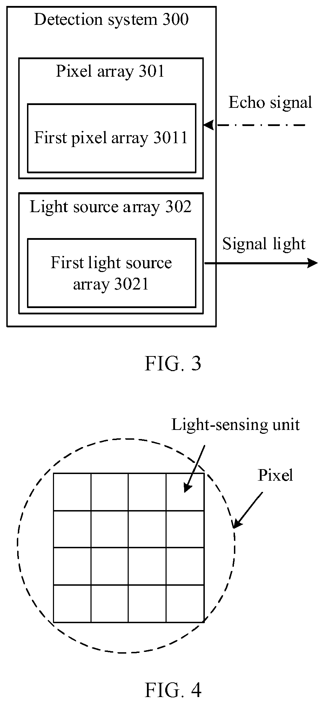

Based on the foregoing content, the following specifically describes the detection system provided in this application with reference to FIG. 3 to FIG. 8b.

FIG. 3 is a schematic diagram of a structure of a detection system according to this application. The detection system 300 includes a pixel array 301 and a light source array 302. The pixel array 301 includes a first pixel array 3011, the light source array 302 includes a first light source array 3021, the first pixel array 3011 includes M×N pixels, the first light source array 3021 includes M×N light sources corresponding to the M×N pixels, where M and N are integers greater than 1. The pixels in the first pixel array are arranged in a staggered manner in a row direction, and a staggering size of the pixels is less than a distance between centers of two adjacent pixels in the row direction; or the pixels in the first pixel array are arranged in a staggered manner in a column direction, and a staggering size of the pixels is less than a distance between centers of two adjacent pixels in the column direction; and an arrangement manner of the light sources in the first light source array is coupled to or matched with an arrangement manner of the pixels in the first pixel array.

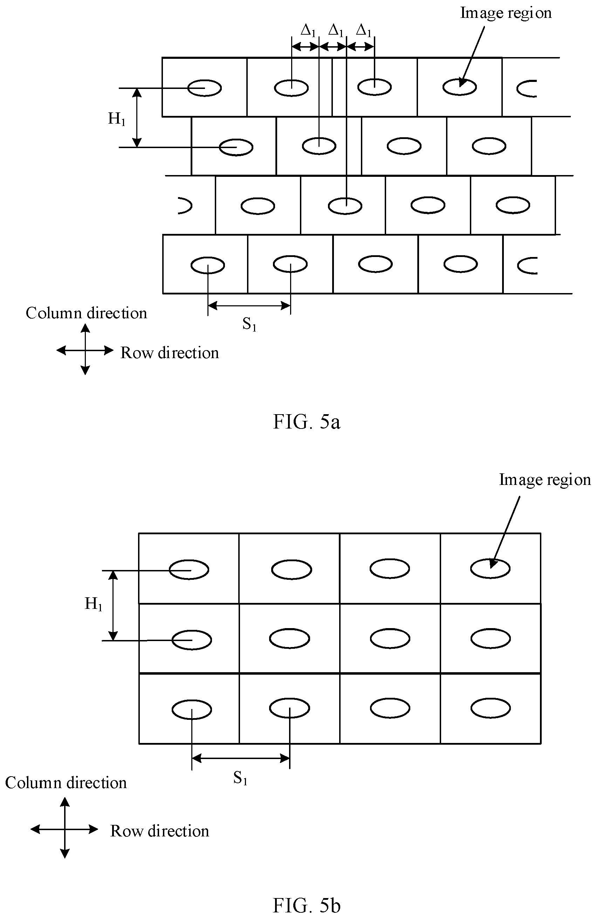

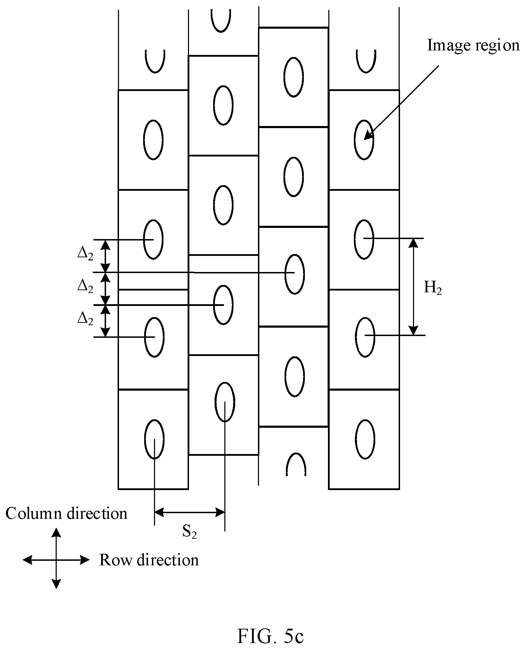

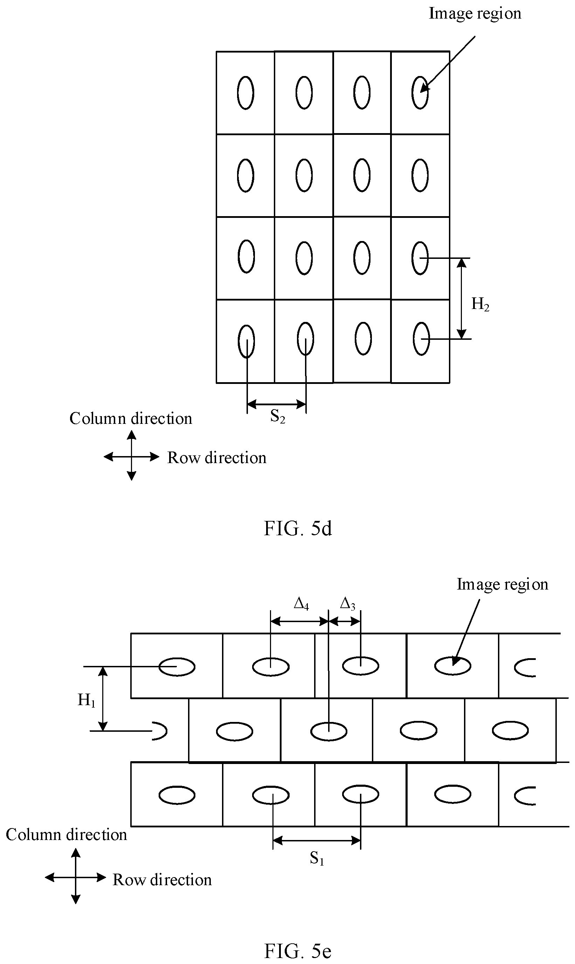

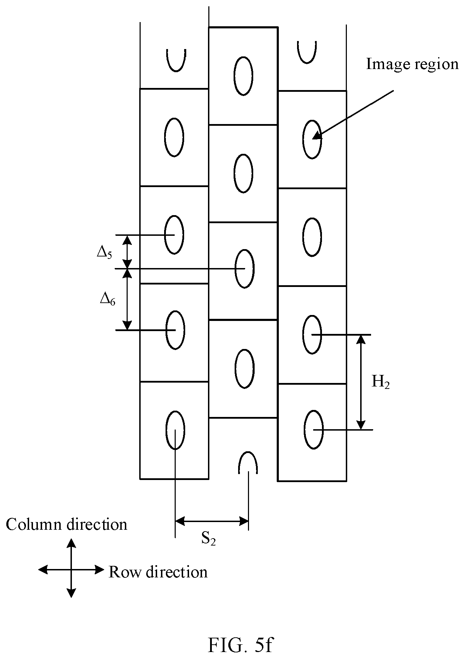

It should be noted that, that pixels in the first pixel array are arranged in a staggered manner in a row direction means that each pixel in an i^{th} row and a corresponding pixel in a j^{th} row are staggered at a specific size in the row direction (that is, two pixels in two adjacent rows are not aligned. Refer to FIG. 5a or FIG. 5e below), and the i^{th} row and the j^{th} row are adjacent to each other. That light sources in the first light source array are arranged in a staggered manner in a row direction means that a light source in an i^{th} row and a light source in a j^{th} row are staggered at a specific size in the row direction, and the i^{th} row and the j^{th} row are adjacent to each other. Similarly, that pixels in the first pixel array are arranged in a staggered manner in a column direction means that a pixel in an i^{th} column and a pixel in a j^{th} column are staggered at a specific size in the column direction (that is, two pixels in two adjacent columns are not aligned. Refer to FIG. 5c or FIG. 5f below), and the i^{th} column and the j^{th} column are two adjacent columns. That the light sources in the first light source array are arranged in a staggered manner in a column direction means that a light source in an i^{th} column and a light source in a j^{th} column are staggered at a specific size in the column direction, and the i^{th} column and the j^{th} column are two adjacent columns.

Based on the detection system, the light sources in the first light source array are arranged in a staggered manner and the pixels in the first pixel array are arranged in a staggered manner. This is equivalent to increasing a quantity of equivalent lines of the detection system per unit area of the first pixel array (for details, refer to descriptions of four staggered arrangement manners provided below). The quantity of equivalent lines is increased, so that a quantity of light spots of an echo signal received per unit area of the first pixel array is increased, to help improve an angular resolution of the detection system. For example, when the pixels in the pixel array and the light sources in the light source array are arranged in a staggered manner in the row direction, an angular resolution (which may be referred to as a first angular resolution) of the detection system in the row direction may be improved. When the pixels in the pixel array and the light sources in the light source array are arranged in a staggered manner in a column direction, an angular resolution (which may be referred to as a second angular resolution) of the detection system in the column direction may be improved.

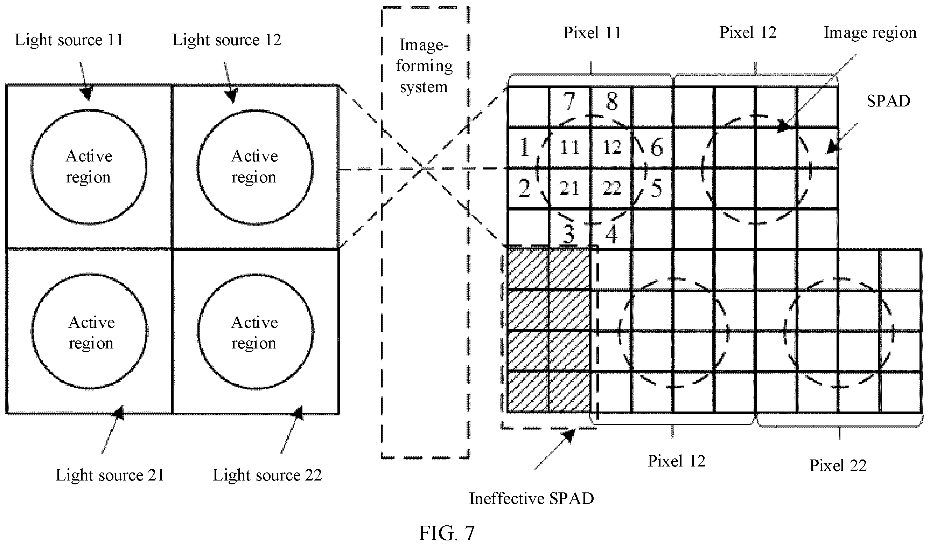

In a possible implementation, M×N light sources included in the first light source array are in a one-to-one correspondence with M×N pixels included in the first pixel array. Refer to FIG. 7. The first light source array includes 2×2 light sources, the first pixel array includes 2×2 pixels, and that the 2×2 light sources are in a one-to-one correspondence with the 2×2 pixels means that a light source 11 is corresponding to a pixel 11, a light source 12 is corresponding to a pixel 12, a light source 21 is corresponding to a pixel 21, and a light source 22 is corresponding to a pixel 22.

According to the claimed invention, the arrangement manner of the light sources in the first light source array is the same as (or referred to as consistent with) the arrangement manner of the pixels in the first pixel array. Further, optionally, the arrangement manner of light sources in the first light source array may be coupled to or matched with the arrangement manner of the pixels in the first pixel array by using an optical image-forming system. It may alternatively be understood that a signal light transmitted by a light source in the light source array may be imaged, by using the optical image-forming system, on a pixel corresponding to the light source. For the optical image-forming system, refer to the following related descriptions. Details are not described herein again.

The following separately describes the structures shown in FIG. 3, to provide an example of a specific implementation. For ease of description, neither the pixel array nor the light source array in the following is marked.

### 1. Pixel array

In a possible implementation, the pixel array may be a two-dimensional (two-dimensional, 2D) pixel array. Further, optionally, a pixel in the pixel array may be obtained through binning (binning) of at least one light-sensing unit (cell) (or referred to as a pixel element). The light-sensing unit may be, for example, a single photon detector, and the single photon detector includes but is not limited to an SPAD or a digital silicon photomultiplier (silicon photomultiplier, SiPM). The single photon detector may be formed by using an FSI process or a BSI process. Usually, a BSI process can be used to achieve a small SPAD size, a high PDE, and high energy efficiency.

For example, the pixel is obtained by binning of m × n light-sensing units. If m=1 and n=1, it indicates that the pixel includes one light-sensing unit, that is, a binning manner of light-sensing units is 1×1; if m=1 and n is an integer greater than 1, it indicates that the pixel is obtained by binning of n light-sensing units in a column direction, that is, a binning manner of light-sensing units is 1×n; if m is an integer 1 greater than 1 and n=1, it indicates that the pixel is obtained by binning of m light-sensing units in the row direction, that is, a binning manner of light-sensing units is m×1; or if m is an integer 1 greater than 1 and n is an integer greater than 1, it indicates that the pixel is obtained by binning of m light-sensing units in the row direction and binning of n light-sensing units in the column direction, that is, a binning manner of light-sensing units is m×n.

FIG. 4 is a schematic diagram of a structure of a pixel according to this application. The pixel is obtained by binning of 4×4 light-sensing units. In other words, a binning manner of light-sensing units is 4×4. It may alternatively be understood that one pixel includes 4×4 light-sensing units. It should be noted that the binning manner of light-sensing units shown in FIG. 4 is merely an example. In this application, binning of light-sensing units may be performed only in the row direction, or binning of light-sensing units may be performed only in the column direction.

In a possible implementation, a shape of a pixel may be a square, or may be a rectangle (as shown in FIG. 4), or may be another possible regular shape (for example, a hexagon, a circle, or an ellipse). It should be noted that a specific shape of a pixel is related to a light-sensing unit forming the pixel and a binning manner of light-sensing units. If the pixel is a rectangle, a length side of the pixel may be in the row direction, or may be in the column direction. It should be understood that a light-sensing unit is usually a symmetric regular pattern, for example, a square (refer to FIG. 4). Certainly, a rectangle may alternatively be used.

In a possible implementation, the first pixel array may be all of a pixel array. In other words, the pixel array includes the M×N pixels. Based on this, the first pixel array in this application may be replaced with a pixel array.

In another possible implementation, the first pixel array may be some pixels of the pixel array. That is, in addition to the first pixel array formed by the M×N pixels, the pixel array may further include another pixels. Based on this, the pixel array may form a regular graph (for example, a rectangle or a square), or may form an irregular graph. This is not limited in this application.

To improve the first angular resolution or the second angular resolution of the detection system as much as possible, the pixels in the first pixel array may be arranged in a staggered arrangement manner.

The following describes the four staggered arrangement manners which may be used within individual first regions of the first pixel array according to the claimed invention. In the following example, for example, the pixels in the first pixel array are rectangles, and a staggering size is based on a center of an image region. The image region refers to a region that is in a pixel and that is used to receive an echo signal from a detection region (refer to the following elliptic region shown in FIG. 5a to FIG. 5d). It may alternatively be understood that an image corresponding to the echo signal is formed in the image region of the pixel. In other words, the image region is an image-forming location of the echo signal.

Manner 1: Arranged in a staggered manner at an equal space in a row direction.

It may alternatively be understood as being arranged in a staggered manner at an equal space in a row direction and arranged in an aligned manner in a column direction.

FIG. 5a is a schematic diagram of a structure in which the pixels of the first pixel array are arranged in a staggered manner in a row direction according to this application. The pixels in the first pixel array are arranged in a staggered manner at an equal space in the row direction and arranged in a staggered manner in a periodicity of N rows, where N is an integer greater than 1. In this example, N=3 is used as an example, and a staggering size between any two adjacent pixels in a row direction is Δ₁. It should be noted that the staggering size Δ₁ between any two adjacent pixels in the row direction is less than a distance S₁ between centers of the two adjacent pixels.

For example, an equivalent focal length of the receiving optical system in the row direction is f₁. If the pixels in the first pixel array are arranged in an existing aligned manner in both the row direction and the column direction (as shown in FIG. 5b), in a range of S₁ in the row direction, an equivalent side length of the pixels in the first pixel array in the row direction is a₁, and a first angular resolution θ₁=a1/f1. Based on the pixel arrangement manner shown in FIG. 5a, in a range of S₁ in the row direction, an equivalent side length of the pixels in the first pixel array in the row direction is a₁/3, and a first angular resolution θ₁'=a₁/3f₁. Therefore, compared with the aligned arrangement manner of the first pixel array shown in FIG. 5b, the staggered arrangement manner of the first pixel array shown in FIG. 5a may increase the angular resolution in the row direction by three times. It should be understood that, based on the arrangement manner of the first pixel array in FIG. 5b, in a range of S₁ in the row direction, a minimum field of view corresponding to pixels is a field of view corresponding to a length S₁. Based on the arrangement manner of the first pixel array in FIG. 5a, a minimum field of view corresponding to pixels is a field of view corresponding to a length S₁/3.

It should be noted that, in the column direction, an angular resolution based on the staggered arrangement manner of the pixels in the first pixel array shown in FIG. 5a is the same as an angular resolution based on the arrangement manner of the pixels in the first pixel array shown in FIG. 5b.

Manner 2: Arranged in a staggered manner at an equal space in a column direction.

It may alternatively be understood as being arranged in a staggered manner at an equal space in the column direction and arranged in an aligned manner in a row direction.

FIG. 5c is a schematic diagram of a structure in which the pixels of the first pixel array are arranged in a staggered manner in a column direction according to this application. The pixels in the first pixel array are arranged in a staggered manner at an equal space in the column direction and arranged in a staggered manner in a periodicity of M columns. In this example, M=3 is used as an example, and a staggering size between any two adjacent pixels in the column direction is Δ₂. It should be noted that the staggering size Δ₂ between any two adjacent pixels in the column direction is less than a distance H₂ between centers of the two adjacent pixels.

For example, a focal length of the receiving optical system in the column direction is f₂. If the pixels in the first pixel array are arranged in an existing aligned manner (as shown in FIG. 5d), in a range of H₂ in the column direction, an equivalent side length of the pixels in the first pixel array in the column direction is b₁, and a second angular resolution θ₂=b₁/f₂. Based on a pixel arrangement manner shown in FIG. 5c, in a range of H₂ in the column direction, a side length of the pixels in the first pixel array in the column direction is b₁/3, and a second angular resolution θ₂'=b₁/3/f₂. Therefore, compared with the aligned arrangement manner of the first pixel array in the conventional technology, the staggered arrangement manner of the first pixel array shown in FIG. 5c may increase the angular resolution in the column direction by three times. It should be understood that, based on the arrangement manner of the first pixel array in FIG. 5d, in a range of H₂ in the row direction, a minimum field of view corresponding to pixels is a field of view corresponding to a length H₂. Based on the arrangement manner of the first pixel array in FIG. 5c, a minimum field of view corresponding to pixels is a field of view corresponding to a length H₂/3.

It should be noted that, in the row direction, an angular resolution based on the staggered arrangement manner of the pixels in the first pixel array shown in FIG. 5c is the same as an angular resolution based on the arrangement manner of the pixels in the first pixel array shown in FIG. 5d.

It should be understood that the staggering size Δ₁ in Manner 1 may be the same as or different from the staggering size Δ₂ in Manner 2.

Manner 3: Arranged in a staggered manner at non-equal spaces in the row direction.

It may alternatively be understood as being arranged in a staggered manner at non-equal spaces in the row direction and arranged in an aligned manner in the column direction.

FIG. 5e is a schematic diagram of another structure in which the pixels of the first pixel array are arranged in a staggered manner in a row direction according to this application. There are at least two different types of staggering sizes of the pixels in the first pixel array in the row direction, and the pixels are arranged in a staggered manner in a periodicity of N rows (which is alternatively referred to as a periodicity of staggered arrangement), where N is an integer greater than 1. In this example, N=2 is used as an example, and a staggering size between two adjacent pixels in the row direction is Δ₃ or Δ₄. For example, Δ₃ is less than Δ₄. The staggering size Δ₃ between any two adjacent pixels in the row direction is less than a distance S₁ between centers of the two adjacent pixels, and the staggering size Δ₄ between any two adjacent pixels in the row direction is also less than the distance S₁ between the centers of the two adjacent pixels.

Based on the staggered arrangement manner of Manner 3, the first pixel array has at least two different first angular resolutions in the row direction. For example, if there are two different staggering sizes in the row direction, there are two different first angular resolutions in the row direction. For another example, if there are three different staggering sizes in the row direction, there are three different first angular resolutions in the row direction.

It should be noted that, staggering sizes in the staggered arrangement at non-equal spaces in the row direction may be different from each other (as shown in FIG. 5e), or some of the staggering sizes may be the same and some of the staggering sizes are different.

For example, an equivalent focal length of the receiving optical system in the row direction is f₁. If the pixels in the first pixel array are arranged in an existing aligned manner (refer to FIG. 5b), a first angular resolution θ₁=a₁/f₁. Based on the pixel arrangement manner shown in FIG. 5e, there are two types of first angular resolutions in the row direction. One type of first angular resolution is θ₁"=Δ₄/f₁, and the other type of first angular resolution is θ₁‴=Δ₃/f₁. Both the two types of first angular resolutions are less than the first angular resolution θ₁ based on FIG. 5b. Therefore, compared with the existing aligned arrangement manner of the pixels in the first pixel array shown in FIG. 5b, the staggered arrangement manner of the first pixel array shown in FIG. 5e can improve an angular resolution in the row direction. It should be understood that, based on the arrangement manner of the first pixel array shown in FIG. 5e, in the row direction, a minimum field of view corresponding to pixels is a field of view corresponding to Δ₃.

Further, optionally, based on this, an overall angular resolution of the first pixel array may be obtained based on the two first angular resolutions. For example, weighted averaging may be performed on the two first angular resolutions. For another example, a resolution of a central region of a point cloud may be used as the overall angular resolution of the first pixel array.

It should be noted that, in the column direction, an angular resolution based on the staggered arrangement manner of the pixels in the first pixel array shown in FIG. 5e is the same as an angular resolution based on the arrangement manner of the pixels in the first pixel array shown in FIG. 5b.

Manner 4: Arranged in a staggered manner at non-equal spaces in the column direction.

It may alternatively be understood as being arranged in a staggered manner at non-equal spaces in the column direction and arranged in an aligned manner in the row direction.

FIG. 5f is a schematic diagram of another structure in which the pixels of the first pixel array are arranged in a staggered manner in a column direction according to this application. There are at least two different types of staggering sizes of the pixels in the first pixel array in the column direction, and the pixels are arranged in a staggered manner in a periodicity of M columns, where M is an integer greater than 1. A staggering size between two adjacent pixels in the column direction is Δ₅ or Δ₆. A staggering size Δ₅ of any two adjacent pixels in the column direction is less than a distance H₂ between centers of the two adjacent pixels, and a staggering size Δ₆ of any two adjacent pixels in the column direction is less than the distance H₂ between centers of two adjacent pixels.

Based on the staggered arrangement manner of Manner 4, the first pixel array has at least two different second angular resolutions in the column direction. For example, if there are two different staggering sizes in the column direction, there are two different second angular resolutions in the column direction. For another example, if there are three different staggering sizes in the column direction, there are three different second angular resolutions in the column direction.

It should be noted that, staggering sizes in the staggered arrangement at non-equal spaces in the column direction may be different from each other (as shown in FIG. 5f), or some of the staggering sizes may be the same and some of the staggering sizes are different. This is not limited in this application.

For example, an equivalent focal length in the row direction of the receiving optical system is f₁. If the pixels in the first pixel array are arranged in an existing aligned manner (refer to FIG. 5d), the second angular resolution θ₂=b₁/f₂. Based on the pixel arrangement manner shown in FIG. 5f, there are two types of second angular resolutions in the column direction. One type of second angular resolution is θ₂"=Δ₅/f₂, and the other type of second angular resolution is θ₂‴=Δ₆/f₂. The two second angular resolutions are less than the second angular resolution θ₂ shown in FIG. 5d. Therefore, compared with the aligned arrangement manner of the first pixel array in the conventional technology, the staggered arrangement manner of the first pixel array shown in FIG. 5f can improve an angular resolution of the detection system in a column direction. It should be understood that, based on the arrangement manner of the first pixel array in FIG. 5d, in a range of H₂ in the row direction, a minimum field of view corresponding to pixels is a field of view corresponding to a length H₂. Based on the arrangement manner of the first pixel array in FIG. 5f, a minimum field of view corresponding to pixels is a field of view corresponding to a length Δ₅.

It should be noted that, in the row direction, an angular resolution based on the staggered arrangement manner of the pixels in the first pixel array shown in FIG. 5f is the same as an angular resolution based on the arrangement manner of the pixels in the first pixel array shown in FIG. 5d.

It should be further noted that, a staggering size of the pixels in the first pixel array depends on an application scenario of the detection system. For example, in a scenario in which a small angular resolution is required, a staggering size of the pixels is small. For another example, in a scenario in which a large angular resolution is required, a staggering size of the pixels is large. It should be understood that a smaller staggering size indicates a smaller angular resolution of the detection system and a larger improved spatial resolution. In addition, a periodicity (M or N) of the first pixel array for a staggered arrangement may be designed based on an application requirement of the detection system.

It should be understood that pixels in the foregoing four manners are all rectangles. If the pixel is a circle, determined side lengths of the first angular resolution and the second angular resolution may be replaced by radii. If the pixel is an ellipse, a determined side length of the first angular resolution may be replaced with a length of a major axis (or a length of a minor axis) of the ellipse, and correspondingly, a determined side length of the second angular resolution may be replaced with a length of a minor axis (or a length of a major axis) of the ellipse. If the pixel is another possible polygon, a determined side length of the first angular resolution may be replaced with a maximum side length in a row direction, and a determined side length of the second angular resolution may be replaced with a maximum side length in a column direction.

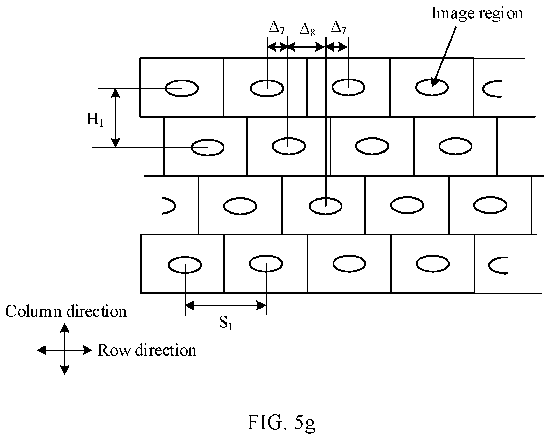

It should be noted that the pixels in the first pixel array may alternatively be arranged in a staggered manner in the row direction based on a combination of the foregoing Manner 1 and Manner 2, that is, some of the pixels are arranged in a staggered manner at an equal space, and some of the pixels are arranged at non-equal spaces. Refer to FIG. 5g. Staggering sizes in the row direction are Δ₇, Δ₈, and Δ₇. Based on the pixel arrangement manner shown in FIG. 5g, there are two types of first angular resolutions in the row direction. One type of first angular resolution is θ₁ʺʺ=Δ₇/f₁, and the other type of first angular resolution is θ₁‴ʺ=Δ₈/f₁. Both the two types of first angular resolutions are less than the first angular resolution θ₁ based on FIG. 5b. Further, optionally, an overall angular resolution of the first pixel array may be obtained based on the two first angular resolutions. For example, weighted averaging may be performed on the two first angular resolutions, where a weight of θ₁ʺʺ may be greater than a weight of θ₁‴ʺ.

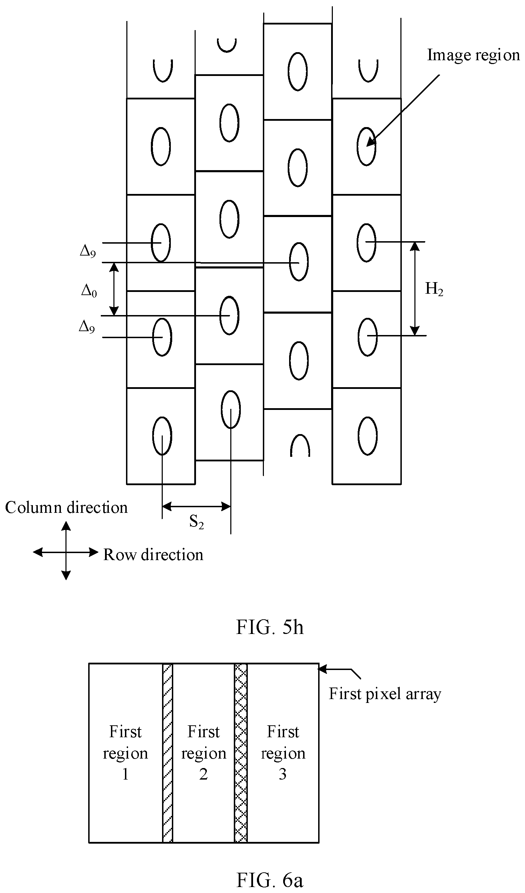

Similarly, the pixels in the first pixel array may alternatively be arranged in a staggered manner in a column direction based on a combination of the foregoing Manner 3 and Manner 4, that is, some of the pixels are arranged in a staggered manner at an equal space, and some of the pixels are arranged in a staggered manner at non-equal spaces. Refer to FIG. 5h. Staggering sizes in the column direction are Δ₉, Δ₀, and Δ₉. Based on the pixel arrangement manner shown in FIG. 5h, there are two types of second angular resolutions in the column direction. One type of second angular resolution is θ₂ʺʺ=Δ₉/f₂, and the other type of first angular resolution is θ₂‴ʺ=Δ₀/f₂. Both the two types of second angular resolutions are less than the second angular resolution θ₂ based on FIG. 5d. Further, optionally, an overall angular resolution of the first pixel array may be obtained based on the two second angular resolutions. For example, weighted averaging may be performed on the two second angular resolutions, where a weight of θ₂ʺʺ may be greater than a weight of θ₂‴ʺ.

In a possible implementation, not according to the invention, the first pixel array may include only one region, that is, the entire first pixel array is corresponding to one type of first angular resolution and one type of second angular resolution. For example, the entire first pixel array uses a same staggered arrangement manner, a same staggering size, and a same binning manner of the light-sensing units.

In another possible implementation, for a complex road condition, or in a scenario in which different angles in a full field of view are corresponding to different first angular resolutions or second angular resolutions, or in a scenario in which different first angular resolutions or second angular resolutions need to be focused on based on different angles in a full field of view, the first pixel array includes at least two different regions, and each region may correspond to at least one first angular resolution or at least one second angular resolution. It may alternatively be understood that the full field of view of the detection system may be corresponding to at least two different first angular resolutions or at least two different second angular resolutions. It should be understood that, when all pixels in the first pixel array are gated, a corresponding field of view is the full field of view of the detection system.

The first pixel array according to the claimed invention includes at least two first regions as follows.

Case 1: The first pixel array is divided into a plurality of first regions based on different staggered arrangement manners.

According to the invention, the first pixel array includes m first regions, there are at least two first regions in the m first regions, and pixels in the at least two first regions each are arranged in a different staggered manner, where m is an integer greater than 1.

According to the invention, the first pixel array uses a combination of at least two of the foregoing four staggered arrangement manners. In other words, one staggered arrangement manner is corresponding to one first region. It may alternatively be understood that the first region of the first pixel array is divided based on a staggered arrangement manner. Specific combinations may be determined based on an application scenario of the detection system.

FIG. 6a is a schematic diagram of a structure of a first pixel array according to this application. For example, the first pixel array includes three first regions (that is, a first region 1, a first region 2, and a first region 3), and each first region is corresponding to one pixel staggered arrangement manner. In a scenario, pixel arrangement manners corresponding to the three first regions are different from each other. For example, the first region 1 may be arranged in a staggered manner in the foregoing Manner 1, the first region 2 may be arranged in a staggered manner in the foregoing Manner 2, and the first region 3 may be arranged in a staggered manner in the foregoing Manner 3. Specifically, a field of view of the first region 1 is corresponding to a first angular resolution 1 and a second angular resolution 1, a field of view of the first region 2 is corresponding to a first angular resolution 2 and a second angular resolution 2, and a field of view of the first region 3 is corresponding to a first angular resolution 3 and a second angular resolution 3. For another example, the first region 1 may be arranged in a staggered manner in the foregoing Manner 1, the first region 2 may be arranged in a staggered manner in the foregoing Manner 2, and the first region 3 may be arranged in a staggered manner in the foregoing Manner 4. Specifically, a field of view of the first region 1 is corresponding to a first angular resolution 1' and a second angular resolution 1', a field of view of the first region 2 is corresponding to a first angular resolution 2' and a second angular resolution 2', and a field of view of the first region 3 is corresponding to a first angular resolution 3' and a second angular resolution 3', and details are not repeated herein.

Based on Case 1, in a full field of view, different first angular resolutions and/or second angular resolutions may be corresponding to different field angles of view without changing a binning manner of light-sensing units.

It should be noted that a shaded region in FIG. 6a may be considered as an ineffective pixel for the first angular resolution and the second angular resolution, that is, a light-sensing unit of the shaded region is not used by default. Further, these light-sensing units in the shaded regions may perform some other functions, for example, assist in implementing background ambient light intensity detection and data collection.

Case 2: The first pixel array is divided into a plurality of regions based on different binning manners of the light-sensing units.

In a possible implementation, the first pixel array includes n second regions, there are at least two second regions in the n second regions, pixels in the at least two second regions each are obtained through binning of a different quantity of light-sensing units, where n is an integer greater than 1.

It may alternatively be understood that binning manners of light-sensing units in different second regions of the first pixel array are different. Based on this, the different second regions of the first pixel array may use a same staggered arrangement manner, and staggering sizes in the different second regions are also the same. It should be noted that, lengths-width ratios of the pixels in the first pixel array may be the same or may be different. When the length-width ratios of the pixels in the first pixel array are different, a rotationally symmetric optical image-forming system with an effective degree of freedom may be used to implement angular resolution adjustment.

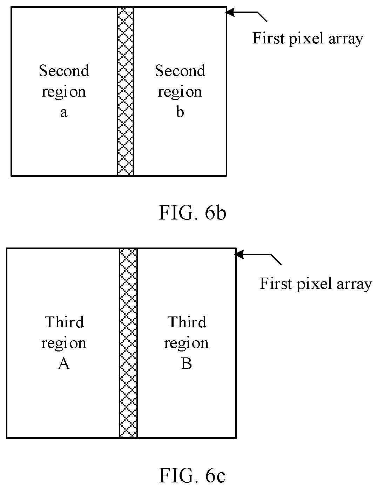

FIG. 6b is a schematic diagram of another structure of a first pixel array according to this application. The first pixel array may be divided into two second regions (that is, a second region a and a second region b). For example, the second region a and the second region b both use the staggered arrangement manner provided in the foregoing Manner 1. A staggering size in the second region a is the same as a staggering size in the second region b, and a binning manner of light-sensing units in the second region a is different from a binning manner of light-sensing units in the second region b. A first angular resolution corresponding to a field of view of the second region a is different from a first angular resolution corresponding to a field of view of the second region b, a second angular resolution corresponding to the field of view of the second region a is different from a second angular resolution corresponding to the field of view of the second region b. A center field of view in the full field of view of a detection system usually requires a higher angular resolution, and an edge field of view in the full field of view may use a slightly lower angular resolution. Based on this, binning of fewer light-sensing units may be set in a central region of the first pixel array, and binning of more light-sensing units may be set in an edge region.

Based on Case 2, binning manners of different light-sensing units are used for different second regions of the first pixel array. This helps implement a different first angular resolution or a different second angular resolution corresponding to a different field angle of view.

In a possible implementation, the m first regions in Case 1 may overlap the n second regions in Case 2 respectively. For example, the m first regions include a first region 1, a first region 2, and a first region 3, the n second regions include a second region A, a second region B, and a second region C, the first region 1 overlaps the second region A, the first region 2 overlaps the second region B, and the first region 3 overlaps the second region C.

Case 3: The first pixel array is divided into a plurality of third regions based on different staggering sizes.

In a possible implementation, the first pixel array includes h third regions, there are at least two third regions in the h third regions, pixels in the at least two third regions each have a different staggering size, where h is an integer greater than 1.

It may alternatively be understood that different third regions in the first pixel array have different staggering sizes. Further, optionally, different third regions of the first pixel array may use a same staggered arrangement manner, and the different third regions have different staggering sizes.

FIG. 6c is a schematic diagram of still another structure of a first pixel array according to this application. For example, the first pixel array is divided into two third regions (that is, a third region A and a third region B), a staggering size of the third region A is less than a staggering size of the third region B, and both the third region A and the third region B use the staggered arrangement manner provided in the foregoing Manner 1. Based on this, a first angular resolution corresponding to a field of view of the third region A is less than a first angular resolution corresponding to a field of view of the third region B, and a second angular resolution corresponding to the field of view of the third region A is equal to a second angular resolution corresponding to the field of view of the third region B. A center field of view in the full field of view of a detection system usually requires a higher angular resolution, and an edge field of view in the full field of view may use a slightly lower angular resolution. Based on this, a small staggering size may be set for a central region of the first pixel array, and a large staggering size may be set for an edge region. It should be understood that the central region of the first pixel array is corresponding to the central field of view in the full field of view, and the edge region of the first pixel array is corresponding to the edge field of view in the full field of view.

Based on Case 3, when different third regions of the first pixel array use a same staggered arrangement manner but different staggering sizes. This helps the detection system to implement a different first angular resolution or a different second angular resolution corresponding to a different field angle of view.

For the foregoing Case 1 and Case 3, an example in which binning manners of the light-sensing units in the first pixel array are the same is used for description. In other words, the foregoing Case 1 and Case 3 belong to a case in which a binning (binning) manner of light-sensing units is not changed, so that different field angles of view may correspond to different angular resolutions.

In a possible implementation, the m first regions in Case 1 may overlap the h third regions in Case 3 respectively. For example, the m first regions include a first region 1, a first region 2, and a first region 3, and the h third regions include a third region A, a third region B, and a third region C. The first region 1 overlaps the third region A, the first region 2 overlaps the third region B, and the first region 3 overlaps the third region C.

In another possible implementation, the n second regions in Case 2 may overlap the h third regions in Case 3 respectively. For example, the n second regions include a second region A, a second region B, and a second region C, the h third regions include a third region A, a third region B, and a third region C, the second region A overlaps the third region A, the second region B overlaps the third region B, and the second region C overlaps the third region C.

It should be noted that, the implementation that the full field of view is corresponding to different first angular resolutions and/or second angular resolutions may also be a combination of the foregoing cases. For example, the foregoing Case 1 and Case 3 are combined. Specifically, an example in which the region 1 may be further divided into a region 11 and a region 12 based on staggering sizes is used. A field of view of the region 11 is corresponding to a first angular resolution θ₁₁₁ and a second angular resolution θ₁₁₂, and a field of view of the region 12 is corresponding to a first angular resolution θ₁₂₁ and a second angular resolution θ₁₂₂. It should be understood that the region 2 and the region 3 may be further divided into regions based on staggering sizes, and details are not repeated herein. Alternatively, the region A may be further divided into a region A1 and a region A2 based on staggered arrangement manners. A field of view of the region A1 is corresponding to a first angular resolution θ_{A11} and a second angular resolution θ_{A12}, and a field of view of the region A2 is corresponding to a first angular resolution θ_{A21} and a second angular resolution θ_{A22}. It should be understood that, the region B may be further divided into regions based on staggering sizes, and details are not repeated herein.

For another example, the foregoing Case 1 and Case 2 are combined. Specifically, an example in which the region 1 may be further divided into a region 1a and a region 1b based on a binning manner of light-sensing units is used. A field of view of the region 1a is corresponding to a first angular resolution θ₁ₐ₁ and a second angular resolution θ₁ₐ₂, and a field of view of the region 12 is corresponding to a first angular resolution θ_{1b1} and a second angular resolution θ_{1b2}. It should be understood that the region 2 and the region 3 may also be further divided into regions based on binning manners of light-sensing units, and details are not repeated herein. Alternatively, for example, the region a may be further divided into a region a1 and a region a2 based on staggered arrangement manners. A field angle of view of the region a1 is corresponding to a first angular resolution θₐ₁₁ and a second angular resolution θₐ₁₂, and a field angle of view of the region a2 is corresponding to a first angular resolution θₐ₂₁ and a second angular resolution θₐ₂₂. It should be understood that the region b may also be further divided into regions based on staggered arrangement manners, and details are not repeated herein.

For another example, the foregoing Case 3 and Case 2 are combined. Specifically, the region A may be further divided into a region Aa and a region Ab based on binning manners of light-sensing units. A field of view of the region Aa is corresponding to a first angular resolution θ_{Aa1} and a second angular resolution θ_{Aa2}, and a field of view of the region Ab is corresponding to a first angular resolution θ_{Ab1} and a second angular resolution θ_{Ab2}. It should be understood that the region B may also be further divided into regions based on binning manners of light-sensing units, and details are not repeated herein. Alternatively, the region a may be further divided into a region aA and a region aB based on staggering sizes. A field angle of view of the region aA is corresponding to a first angular resolution θ_{aA1} and a second angular resolution θ_{aA2}, and a field angle of view of the region aB is corresponding to a first angular resolution θ_{aB1} and a second angular resolution θ_{aB2}. It should be understood that the region b may also be further divided into regions based on staggering sizes, and details are not repeated herein.

For another example, the foregoing Case 1, Case 3, and Case 2 are combined. Specifically, the region 1 may be further divided into a region 11 and a region 12 based on staggering sizes, and the region 11 may be further divided into a region 111 and a region 112 based on binning manners of light-sensing units. A field of view of the region 111 is corresponding to a first angular resolution θ₁₁₁₁ and a second angular resolution θ₁₁₁₂, and a field of view of the region 112 is corresponding to a first angular resolution θ₁₁₂₁ and a second angular resolution θ₁₁₂₂. It should be understood that the region 2 and the region 3 may also be further divided into regions based on staggering sizes, and the region obtained after further division is further divided into regions based on binning manners of light-sensing units, and details are not repeated herein. Alternatively, the region A may be further divided into a region A11 and a region A21 based on staggered arrangement manners. Further, the region A11 may be divided into a region A11a and a region A21b based on binning manners of light-sensing units. A field of view of the region A11a is corresponding to a first angular resolution θ_{A11a1} and a second angular resolution θ_{A11a2}, and a field of view of the region A21b is corresponding to a first angular resolution θ_{21b1} and a second angular resolution θ_{21b2}. It should be understood that other possible combinations may be used, and details are not repeated herein.

It should be noted that the foregoing quantity of regions obtained through division is merely an example.

In a possible implementation, the first pixel array may be a same chip. In other words, different regions of a same chip may correspond to a different first angular resolution and/or a second angular resolution.

For example, the first pixel array may perform optical-to-electrical conversion on a received echo signal, to obtain correlative information used to determine a target in a detection region, for example, distance information of the target, an orientation of the target, a speed of the target, and/or grayscale information of the target.

### 2. Light source array

In a possible implementation, the light source array may be a 2D addressable light source array. The addressable light source array refers to a light source that can be independently gated (or referred to as light-on, turn-on, or power-on) in the light source array, and the gated light source may be used to transmit a signal light.

In a possible implementation, the light source array includes a first light source array. The first light source array is the entire light source array, that is, the light source array includes M×N light sources corresponding to the M×N pixels. Based on this, the first light source array in this application may be replaced with a light source array.

In another possible implementation, the first light source array may be some light sources in the light source array. In other words, in addition to the first light source array formed by M×N light sources, the light source array may further include another light source. Based on this, the light source array may form a regular pattern, or may form an irregular pattern. This is not limited in this application.

For example, the light source in the light source array may be a vertical cavity surface emitting laser (vertical cavity surface emitting laser, VCSEL), an edge emitting laser (edge emitting laser, EEL), an all-solid-state semiconductor laser (diode pumped solid state laser, DPSS), or an optical fiber laser.

The Vcsel is used as an example. The Vcsel may include an active region (optical area, OA). The active region is an area used by the Vcsel to transmit a signal light, and another area of the Vcsel does not emit a light. The active region may be located in a central region of the Vcsel, or may be located in an edge region of the Vcsel, or may be located in another region of the Vcsel. This is not limited in this application. The active region of the Vcsel is corresponding to an image region of a pixel corresponding to the Vcsel. A location of an image region of a pixel covered by an image of an echo signal that is obtained by a target in a detection region reflecting a signal light transmitted by the active region of the Vcsel may be changed by adjusting a location of the active region of the Vcsel (for example, adjusting central coordinates of the active region). When the active region is located in the central region of the Vcsel, it is beneficial that the pixel corresponding to the active region can receive an echo signal as much as possible, to improve utilization of the echo signal.

In a possible implementation, the light source array includes k regions, there are at least two regions in the k regions, and an active region of a light source in the at least two regions each have a different location relative to the light source, where k is an integer greater than 1. Spatial arrangement manners (that is, locations relative to light sources) of active regions of Vcsels in some regions in the first light source array are changed. To be specific, in different regions of the first light source array, active regions of the light sources are disposed at different locations relative to the light sources. This helps implement a different first angular resolution or a different second angular resolution corresponding to a different field angle of view without changing a structure of the first pixel array.

In a possible implementation, the first pixel array and the first light source array are closely related in terms of an arrangement manner and a specification design. Further, optionally, an arrangement manner of the light sources in the first light source array is matched with an arrangement manner of the pixels in the first pixel array. If the arrangement manner of the pixels in the first pixel array is the foregoing Manner 1, the arrangement manner of the light sources in the first light source array may alternatively be the arrangement manner shown in FIG. 5a. If the arrangement manner of the pixels in the first pixel array is the foregoing Manner 2, the arrangement manner of the light sources in the first light source array may alternatively be the arrangement manner shown in FIG. 5c. If the arrangement manner of the pixels in the first pixel array is the foregoing Manner 3, the arrangement manner of the light sources in the first light source array may alternatively be the arrangement manner shown in FIG. 5e. If the arrangement manner of the pixels in the first pixel array is the foregoing Manner 4, the arrangement manner of the light sources in the first light source array may alternatively be the arrangement manner shown in FIG. 5f. If the arrangement manner of the pixels in the first pixel array is FIG. 5g, the arrangement manner of the light sources in the first light source array may alternatively be the arrangement manner shown in FIG. 5g. If the arrangement manner of the pixels in the first pixel array is FIG. 5h, the arrangement manner of the light sources in the first light source array may alternatively be the arrangement manner shown in FIG. 5h. For a specific arrangement manner of the light sources in the first light source array, refer to a corresponding arrangement manner of the pixels in the first pixel array. An image region in a pixel may be replaced with an active region. Details are not described herein again.

It should be noted that the first light source array and the first pixel array use a same staggered arrangement manner, but a staggering size of the light sources may be different from a staggering size of the pixels.

In a possible implementation, one light source is corresponding to one pixel, and one pixel may be obtained by binning of m×n light-sensing units. The following shows a correspondence between a light source and a light-sensing unit as an example.

FIG. 7 shows a correspondence between a light source and a light-sensing unit according to this application. In this example, the first pixel array includes 2×2 pixels (that is, a pixel 11, a pixel 12, a pixel 21, and a pixel 22), the first light source array includes 2×2 light sources (that is, a light source 11, a light source 12, a light source 21, and a light source 22), and each pixel includes 4×4 SPADs. The pixel 11 is corresponding to the light source 11, the pixel 12 is corresponding to the light source 12, the pixel 21 is corresponding to the light source 21, the pixel 22 is corresponding to the light source 22, and an active region of each light source is corresponding to an image region of a corresponding pixel.

It should be noted that the pixel array obtained when pixels are arranged in a staggered manner may be referred to as an abnormal-shaped structure, and the light source array obtained when light sources are arranged in a staggered manner may also be referred to as an abnormal-shaped structure.

In this application, the detection system may further include an optical image-forming system, and the optical image-forming system may include a transmitting optical system and a receiving optical system. Further, optionally, the transmitting optical system and the receiving optical system may be the same, or the transmitting optical system and the receiving optical system may be different. Any optical image-forming system that can image, on a corresponding pixel, a signal light emitted by a light source in a light source array falls within the protection scope of this application. The following uses an example in which the transmitting optical system is the same as the receiving optical system for description.

### 3. Optical image-forming system

In a possible implementation, a signal light transmitted by a light source in the light source array may be shaped and/or collimated by the transmitting optical system and then emitted to a detection region, and an echo signal is obtained by reflecting the signal light by a target in the detection region. The echo signal is then shaped and/or collimated by the receiving optical system and then received by a corresponding pixel in the pixel array. Refer to FIG. 7, a signal light transmitted by an active region of the light source 11 is transmitted by the transmitting optical system and then is emitted to a detection region, and an echo signal is obtained by reflecting the signal light by a target in the detection region. The echo signal may be imaged in an image region of the corresponding pixel 11. A signal light transmitted by an active region of the light source 12 is transmitted by the transmitting optical system and then is emitted to a detection region, and an echo signal is obtained by reflecting the signal light by a target in the detection region. The echo signal may be imaged in an image region of the corresponding pixel 12. A signal light transmitted by an active region of the light source 21 is transmitted by the transmitting optical system and then is emitted to a detection region, and an echo signal is obtained by reflecting the signal light by a target in the detection region. The echo signal may be imaged in an image region of the corresponding pixel 21. A signal light transmitted by an active region of the light source 22 is transmitted by the transmitting optical system and then is emitted to a detection region, and an echo signal is obtained by reflecting the signal light by a target in the detection region. The echo signal may be imaged in an image region of the corresponding pixel 22.

In a possible implementation, one-to-one alignment between a transmitting field of view of the light source in the light source array and a receiving field of view of the pixel in the pixel array may be implemented based on an optical principle of focal plane image-forming. That is, a transmitting field of view of each light source in the light source array and a receiving field of view of each pixel in the pixel array are in a one-to-one correspondence in space. In other words, one pixel is corresponding to one receiving field of view, one light source is corresponding to one transmitting field of view, and the receiving field of view and the transmitting field of view are in one-to-one alignment in space. Specifically, each light source in the light source array is on an object side of the optical image-forming system, and a photosensitive surface of each pixel in the pixel array is located on an image side of the optical image-forming system. Specifically, the light source in the light source array is on an object side focal plane of the transmitting optical system, and the photosensitive surface of the pixel in the pixel array is on an image side focal plane of the receiving optical system. The signal light emitted by the light source in the light source array is transmitted to the detection region through the transmitting optical system, and the echo signal obtained by the target reflecting the signal light in the detection region can be imaged on the image side focal plane through the receiving optical system.

Based on this, the transmitting optical system and the receiving optical system usually use a same optical lens. In this way, the transmitting optical system and the receiving optical system are simple and can be modularized, so that the detection system can be small in size, highly integrated, and the like.

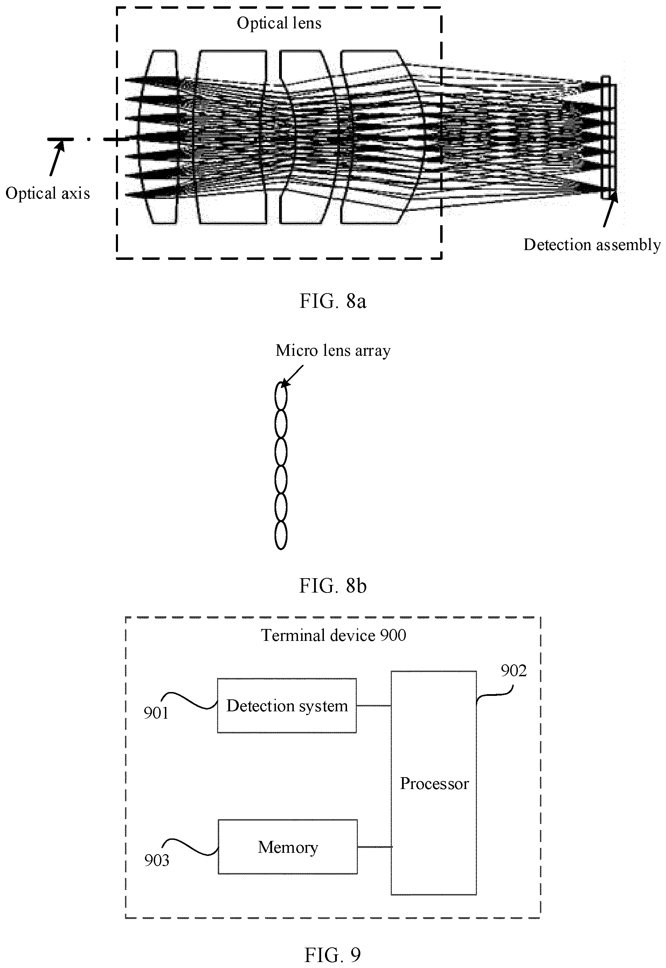

FIG. 8a is a schematic diagram of a structure of an optical lens according to this application. The optical lens includes at least one lens element. The lens element may be, for example, a lens. In FIG. 8a, an example in which the optical lens includes four lenses is used. An optical axis of the optical lens refers to a straight line that passes through a spherical sphere center of each lens shown in FIG. 8a.

It should be noted that the optical lens may be rotationally symmetric about the optical axis. For example, the lens element in the optical lens may be a single spherical lens, or may be a combination of a plurality of spherical lenses (for example, such as a combination of concave lenses, a combination of convex lenses, or a combination of a convex lens and a concave lens). A combination of a plurality of spherical lenses helps improve image-forming quality of the detection system and reduce aberration of the optical image-forming system. It should be understood that the convex lens and the concave lens have a plurality of different types. For example, the convex lens includes a biconvex lens, a flat convex lens, and a concave convex lens, and the concave lens includes a biconcave lens, a flat concave lens, and a concave convex lens. This helps improve a multiplex rate of an optical component of the detection system, and facilitates installation and adjustment of the detection system. A horizontal equivalent focal length and a vertical equivalent focal length of the optical lens that is rotationally symmetric about the optical axis are the same.

It should be noted that the lens element in the optical lens may alternatively be a single aspheric lens or a combination of a plurality of aspheric lenses.

In a possible implementation, a material of the lens element in the optical lens may be an optical material such as glass, resin, or crystal. When the material of the lens element is resin, it helps to reduce a weight of the detection system. When the material of the lens element is glass, this helps further improve image-forming quality of the detection system. Further, to effectively suppress temperature drift, the optical lens includes at least one lens element made of a glass material.

FIG. 8b is a schematic diagram of a structure of another optical lens according to this application. The optical lens is a micro-lens array (micro lens array, MLA). The micro lens array may collimate and/or shape a signal light from the light source array, and transmit the collimated and/or shaped signal light to a detection region. For example, the micro lens array may implement a signal light collimation degree of 0.05° to 0.1°.

It should be noted that the foregoing provided structure of the optical lens may be used as the transmitting optical system, or may be used as the receiving optical system, or both the transmitting optical system and the receiving optical system use the foregoing structure of the optical lens. It should be understood that the transmitting optical system and the receiving optical system may alternatively be other possible structures, for example, micro optical systems that are stuck on a surface of the light source array and a surface of the pixel array.

It should be further noted that, if a focal length of the receiving optical system may change with a field angle of view of the detection system, a different field of view may be corresponding to a different first angular resolution and/or a second angular resolution by changing the focal length of the receiving optical system.

In a possible implementation, a length-width ratio of a light source in the first light source array is the same as a length-width ratio of a corresponding pixel in the first pixel array. Based on this, focal lengths of the transmitting optical system and the receiving optical system may be the same. In another possible implementation, a length-width ratio of a light source in the light source array is equal to a₁: a₂. Based on this, a focal length ratio of the transmitting optical system to the receiving optical system is equal to a₂: a₁. It may alternatively be understood that the first light source array and the first pixel array are mapped in a one-to-one manner in space by using the receiving optical system and the transmitting optical system, which may be referred to as being coupled or matched.

Further, optionally, the detection system may further include a control module. The control module may be a central processing unit (central processing unit, CPU), or may be another general-purpose processor (for example, a microprocessor, or may be any conventional processor), a field programmable gate array (field programmable gate array, FPGA), a signal data processing (digital signal processing, DSP) circuit, an application-specific integrated circuit (application-specific integrated circuit, ASIC), a transistor logic device, or another programmable logic device, or any combination thereof.

In a possible implementation, when the detection system is applied to a vehicle, the control module may be used to plan a driving path based on determined correlative information of the detection region, for example, avoid an obstacle on a road to be traveled on.

In a possible implementation, the detection system in any one of the foregoing embodiments may be a lidar, for example, a pure solid-state lidar.

Based on the foregoing content and a same concept, this application may further provide a terminal device in this application. FIG. 9 is a schematic diagram of a structure of a terminal device according to an embodiment of this application. The terminal device 900 may include the detection system 901 in any one of the foregoing embodiments. Further, optionally, the terminal device may further include a processor 902. The processor 902 is configured to invoke a program or instructions to control the detection system 901 to detect a detection region. Further, the processor 902 may further receive an electrical signal that is obtained through optical-to-electrical conversion of an echo signal and that is from the detection system 901, and determine correlative information of a target based on the electrical signal. Optionally, the terminal device may further include a memory 903, and the memory 903 is configured to store a program or instructions. The terminal device may also include other components, such as a wireless communication apparatus.

. For the detection system 901, refer to the description of the foregoing detection system. This is not described herein again.

The processor 902 may include one or more processing units. For example, the processor 902 may include an application processor (application processor, AP), a graphics processing unit (graphics processing unit, GPU), an image signal processor (image signal processor, ISP), a controller, and a digital signal processor (digital signal processor, DSP). Different processing units may be independent components, or may be integrated into one or more processors.

For example, the memory 903 includes but is not limited to a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

In a possible implementation, the processor 902 may further plan a driving path of the terminal device based on the determined correlative information of the target, for example, avoid an obstacle in the driving path.

For example, the terminal device may be, for example, a vehicle (for example, a self-driving vehicle, an intelligent vehicle, an electric vehicle, or a digital vehicle), a robot, a surveying and mapping device, an uncrewed aerial vehicle, a smart home device (for example, a television, a vacuum cleaner robot, a smart desk lamp, an acoustic system, an intelligent lighting system, an electrical control system, home background music, a home theater system, an intercom system, or a video surveillance device), or an intelligent manufacturing device (for example, an industrial device), an intelligent transport device (for example, an AGV, an unmanned transport vehicle, or a truck), an intelligent terminal (for example, a mobile phone, a computer, a tablet computer, a palmtop computer, a desktop computer, a headset, an acoustic device, a wearable device, an in-vehicle device, a virtual reality device, or an augmented reality device), or the like.

Based on the foregoing content and a same concept, this application provides a method for controlling detection. Refer to the description in 10. The method for controlling detection may be applied to the detection system shown in any one of the embodiments in FIG. 3 to FIG. 8b. It may alternatively be understood that the following detection method may be implemented based on the detection system shown in any one of the foregoing embodiments in FIG. 3 to FIG. 8b. Alternatively, the method for controlling detection may also be applied to the terminal device shown in FIG. 9. It may alternatively be understood that the method for controlling detection may be implemented based on the terminal device shown in FIG. 9.

The method for controlling detection may be performed by a control apparatus, and the control apparatus may belong to a detection system, or may be a control apparatus independent of the detection system, for example, a chip or a chip system. When the control apparatus belongs to a vehicle, the control apparatus may be a domain processor in the vehicle, or may be an electronic control unit (electronic control unit, ECU), or the like in a vehicle.

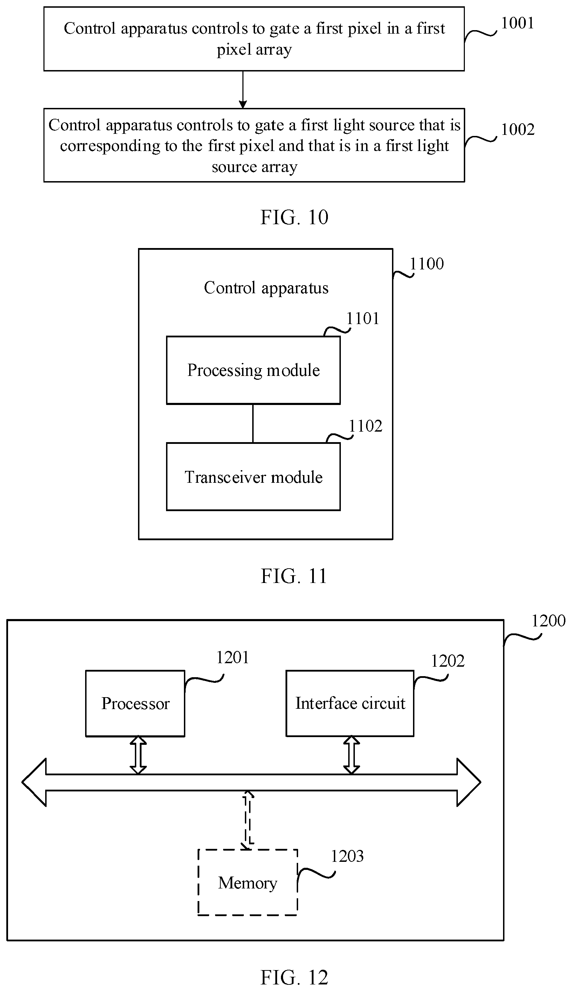

As shown in FIG. 10, the method includes the following steps.

Step 1001: A control apparatus controls to gate a first pixel in a first pixel array.

The first pixel is some pixels or all pixels in the first pixel array.

Step 1002: The control apparatus controls to gate a first light source that is corresponding to the first pixel and that is in the first light source array.

If the first pixel is some pixels in the first pixel array, the first light source is also some light sources that are corresponding to the first pixel and that are in the first light source array; or if the first pixel is all pixels in the first pixel array, the first light source is also all of the first light source array.

It should be noted that step 1001 and step 1002 do not indicate a sequence. Step 1001 and step 1002 are usually performed at the same time.

In a possible implementation, the control apparatus may generate a first control instruction based on a target angular resolution, and send the first control instruction to the pixel array, to control to gate the first pixel in the first pixel array; and/or the control apparatus sends a first control instruction to the light source array, to control to gate the first light source that is corresponding to the first pixel and that is in the first light source array.

The target angular resolution may be generated or obtained by an upper layer (that is, a layer that can obtain a requirement or an application scenario of the detection system, for example, an application layer) of the detection system based on the requirement (or the application scenario) of the detection system. For example, in a scenario with a high requirement on an angular resolution, a value of the target angular resolution is small. For another example, in a scenario in which a requirement on an angular resolution is low, a value of the target angular resolution is large. For another example, when a requirement on an angular resolution is high and a detection distance needs to be short, a value of the target angular resolution is large. For another example, when a requirement on an angular resolution is low and a detection distance needs to be long, a value of the target angular resolution is low.

In actual use, gating of the light sources in the first light source array may be working in non-adjacent rows or nonadjacent columns at the same time. For example, a first row is gated at a first moment, and a third row is gated at a second moment. In this way, optical crosstalk is reduced.

It can be learned from the foregoing step 1001 to step 1002 that, a light source and a corresponding pixel may be gated in a row direction and/or a column direction in a self-defined manner without changing the pixel array and the light source array, so that a quantity of equivalent lines in the row direction and/or the column direction of the detection system can be flexibly adjusted, and an angular resolution in the row direction or an angular resolution in the column direction of the detection system can be flexibly adjusted. Specifically, an angular resolution of the detection system may be customized based on a requirement of a scenario that requires detection. For example, when the detection system is not replaced, the angular resolution in the column direction may be changed by controlling modification and setting of an equivalent line bundle in the column direction when the detection system works, and the angular resolution in the row direction may be changed by controlling modification and setting of an equivalent line bundle in the row direction when the detection system works.

When the binning manner is used for pixels in the first pixel array, an angular resolution of the detection system is reduced. For a scenario that requires a high angular resolution (for example, a near-distance detection scenario, or a field of view of a single pixel is less than or equal to a required minimum angular resolution), the control apparatus may extend, during data processing, point cloud information corresponding to one pixel to a plurality of pieces.

In a possible manner, the pixel in the first pixel array is obtained through binning of p×q light-sensing units, where both p and q are integers greater than 1; and the control apparatus determines that a detection distance is less than a threshold, and extends point cloud information corresponding to the pixel to Q pieces, where Q is an integer greater than 1. It may alternatively be understood that when determining that the detection distance is less than the threshold, the control apparatus starts a point cloud extension function. It should be noted that the threshold may be preset or calibrated, and stored in the detection system. It should be understood that when the detection distance is less than the threshold, it indicates that the detection system is performing short-distance detection. In this case, a high first angular resolution and/or a second angular resolution are usually required.

Further, optionally, the control apparatus may further control to gate a×b light-sensing units in a central region of the pixel in the pixel array, and control to gate a light-sensing unit adjacent to at least one of the a×b light-sensing units, where the a×b light-sensing units are corresponding to one piece of first point cloud information, where a is less than p, and b is less than q, and the adjacent light-sensing unit outputs second point cloud information. The point cloud information can achieve higher point cloud density, which can improve the first angular resolution and/or the second angular resolution of the detection system.

Refer to FIG. 7, the pixels in the first pixel array use a 4x4 binning manner. In a working process of the detection system, one pixel may output one piece of point cloud information. The control apparatus may usually control to gate four SPADs (that is, a SPAD 11, a SPAD 12, a SPAD 21, and a SPAD 22) in a central region of the pixel to receive an echo signal, that is, signals sensed by the four SPADs in the central region of the pixel are added together to output one piece of first point cloud information. When the detection distance is less than the threshold, to improve the first angular resolution and/or the second angular resolution of the detection system, one piece of point cloud information may be extended to a plurality of pieces. Specifically, in the central region in FIG. 7, adjacent SPADs of the four SPADs are SPAD 1 to SPAD 8, that is, there are eight adjacent SPADs. SPAD 1 to SPAD 8 and the four SPADs at the four corners are usually not gated. When the control apparatus determines that the detection distance is less than the threshold, point cloud information (which can be referred to second point cloud information) of at least one SPAD of the SPAD 1 to SPAD 8 can be added. Spatial coordinates of the added second point cloud information can be calculated through preset calculation of actual point cloud information. For example, an average value of strength or a distance or an appropriate interpolation is used to determine the added second point cloud information.

For example, the point cloud information includes but is not limited to spatial coordinates, strength, a distance, and the like. For example, one piece of point cloud information is extended to five pieces of point cloud information. Four SPADs in the central region may output one piece of first point cloud information, and a generation policy of other four pieces of second point cloud information may be: For a 2×2 region formed by the SPAD 1, the SPAD 2, the SPAD 11, and the SPAD 21, spatial coordinates may be spatial coordinates of center points of the four SPADs, and distance and intensity information is an average value of data collected by the SPAD 11 and the SPAD 21 in a first column of the central region. That is, the SPAD 1 and the SPAD 2 always do not output a valid single-photon count value, and the second point cloud information may be obtained. Similarly, in a 2×2 region formed by the SPAD 3, the SPAD 4, the SPAD 21, and the SPAD 22, spatial coordinates may be spatial coordinates of central points of the four SPADs, and distance and intensity information is an average value of data collected by the SPAD 21 and the SPAD 22 in a second row of the central region, that is, the SPAD 3 and the SPAD 4 always do not output a valid single-photon count value. Based on a same processing manner, another second point cloud information may be obtained, another two pieces of second point cloud information may be obtained. It should be understood that flight time corresponding to the second point cloud information obtained by adding may be considered to be the same as flight time corresponding to the first point cloud information output by the SPAD in the central region.

It should be noted that, in any one of the foregoing embodiments, a row direction may be consistent with a horizontal direction, and a column direction may be consistent with a vertical direction.

Based on the foregoing content and a same concept, FIG. 11 and FIG. 12 each are a schematic diagram of a possible structure of a control apparatus according to this application. These control apparatuses may be configured to implement the method in FIG. 10 in the foregoing method embodiment. Therefore, beneficial effects of the foregoing method embodiment can also be implemented. In this application, the control apparatus may be the control module in the foregoing detection system, or may be the processor in the terminal device in FIG. 9, or may be another independent control apparatus (for example, a chip).

As shown in FIG. 11, the control apparatus 1100 includes a processing module 1101, and may further include a transceiver module 1102. The control apparatus 1100 is configured to implement the method in the method embodiment shown in FIG. 10.

When the control apparatus 1100 is configured to implement the method in the method embodiment shown in FIG. 10, the processing module 1101 is configured to control, by using the transceiver module 1102, to gate a first pixel in a first pixel array, and control to gate a first light source that is corresponding to the first pixel and that is in the first light source array, where the first pixel is some or all pixels in the first pixel array.

It should be understood that, in this embodiment of this application, the processing module 1101 may be implemented by a processor or a processor-related circuit component, and the transceiver module 1102 may be implemented by an interface circuit or a related circuit component.

Based on the foregoing content and a same concept, as shown in FIG. 12, this application further provides a control apparatus 1200. The control apparatus 1200 may include a processor 1201, and further, optionally, may further include an interface circuit 1202. The processor 1201 and the interface circuit 1202 are coupled to each other. It may be understood that the interface circuit 1202 may be an input/output interface. Optionally, the control apparatus 1200 may further include a memory 1203, configured to store a computer program, instructions, or the like executed by the processor 1201.

When the control apparatus 1200 is configured to implement the method shown in FIG. 10, the processor 1201 is configured to perform a function of the foregoing processing module 1101, and the interface circuit 1202 is configured to perform a function of the transceiver module 1102.

Based on the foregoing content and a same concept, this application provides a chip. The chip may include a processor and an interface circuit. Further, optionally, the chip may further include a memory. The processor is configured to execute a computer program or instructions stored in the memory, so that the chip performs the method according to any one of the possible implementations in FIG. 10.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the control apparatus. Certainly, the processor and the storage medium may exist in the control apparatus as discrete components.

All or some of the foregoing embodiments may be implemented by software, hardware, firmware, or any combination thereof. When software is used to implement the foregoing embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a control apparatus, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium such as a floppy disk, a hard disk, or a magnetic tape, may be an optical medium such as a digital video disc (digital video disc, DVD), or may be a semiconductor medium such as a solid-state drive (solid-state drive, SSD).

In this application, "perpendicularity" may not mean absolute perpendicularity, and some engineering errors may be allowed. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between associated objects. In the formula of this application, the character "/" indicates a "division" relationship between associated objects. In addition, the word "for example" in embodiments of this application is used to represent giving an example, an illustration, or a description. Any embodiment or design scheme described as an "example" in this application should not be explained as being more preferred or having more advantages than another embodiment or design scheme. Alternatively, it may be understood that the word "example" is used to present a concept in a specific manner, and does not constitute a limitation on this application.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects but do not necessarily indicate a specific order or sequence. In addition, the terms "include", "have", and any variant thereof are intended to cover non-exclusive inclusion, for example, include a series of steps or units.

The invention is defined in the appended claims.

## Claims

1. A detection system (300), comprising a pixel array (301) and a light source array (302), wherein the pixel array (301) comprises a first pixel array (3011), the first pixel array (3011) comprises M×N pixels, the light source array (302) comprises a first light source array (3021), the first light source array (3021) comprises M×N light sources corresponding to the M×N pixels, and both M and N are integers greater than 1;
the pixels in the first pixel array (3011) are arranged in a staggered manner in a row direction, and a staggering size of the pixels is less than a distance between centers of two adjacent pixels in the row direction; or the pixels in the first pixel array (3011) are arranged in a staggered manner in a column direction, and a staggering size of the pixels is less than a distance between centers of two adjacent pixels in the column direction; and
the light sources in the first light source array (3021) are arranged in the same manner as the pixels in the first pixel array (3011);
**characterised in that** the first pixel array (3011) comprises m first regions, wherein m is an integer greater than 1;
wherein a manner in which the pixels in each first region are arranged in a staggered manner is one of the following four manners:
the pixels in the first region are arranged in a staggered manner at an equal space in the row direction;
the pixels in the first region are arranged in a staggered manner at non-equal spaces in the row direction;
the pixels in the first region are arranged in a staggered manner at an equal space in the column direction; or
the pixels in the first region are arranged in a staggered manner at non-equal spaces in the column direction;
wherein pixels in at least two first regions from the m first regions are arranged in a different staggered manner of the four manners.

2. The detection system (300) according to claim 1, wherein the pixel in the pixel array (301) is obtained through binning of p×q light-sensing units, where p and q are integers greater than or equal to 1;
wherein signals sensed by all light-sensing units in binned light-sensing units are added together and read in a manner of one pixel.

3. The detection system (300) according to claim 1 or 2, wherein the first pixel array (3011) comprises n second regions, there are at least two second regions in the n second regions, and pixels in the at least two second regions each are obtained through binning of a different quantity of light-sensing units, wherein n is an integer greater than 1.

4. The detection system (300) according to any one of claims 1 to 3, wherein the first pixel array (3011) comprises h third regions, there are at least two third regions in the h third regions, and pixels in the at least two third regions each have a different staggering size, wherein h is an integer greater than 1.

5. The detection system (300) according to any one of claims 1 to 4, wherein a light source in the light source array (302) comprises an active region, and the active region is configured to transmit a signal light; and
the light source array (302) comprises k regions, there are at least two regions in the k regions, and an active region of a light source in the at least two regions each have a different position relative to the light source, wherein k is an integer greater than 1.

6. The detection system (300) according to any one of claims 1 to 5, wherein the detection system (300) further comprises an optical image-forming system; and
the light source array (302) is on a focal plane of an image side of the optical image-forming system, and the pixel array (301) is on a focal plane of an object side of the optical image-forming system.

7. The detection system (300) according to claim 6, wherein a signal light transmitted by a light source in the light source array (302) is imaged, by using the optical image-forming system, on a pixel corresponding to the light source.

8. A terminal device (900), comprising the detection system (901) according to any one of claims 1 to 7.

9. A method for controlling detection, applied to a detection system (300), wherein the detection system (300) comprises a pixel array (301) and a light source array (302), the pixel array (301) comprises a first pixel array (3011), the first pixel array (3011) comprises M×N pixels, the light source array (302) comprises a first light source array (3021), the first light source array (3021) comprises M×N light sources corresponding to the M×N pixels, and both M and N are integers greater than 1; the pixels in the first pixel array (3011) are arranged in a staggered manner in a row direction, and a staggering size of the pixels is less than a distance between centers of two adjacent pixels in the row direction; or the pixels in the first pixel array (3011) are arranged in a staggered manner in a column direction, and a staggering size of the pixels is less than a distance between centers of two adjacent pixels in the column direction; the light sources in the first light source array (3021) are arranged in the same manner as the pixels in the first pixel array (3011); and
the method comprises:
controlling (1001) to gate a first pixel in the first pixel array (3011), wherein the pixel in the first pixel array is obtained through binning of p×q light-sensing units, wherein both p and q are integers greater than 1, and wherein signals sensed by all light-sensing units in binned light-sensing units are added together and read in a manner of one pixel; and
controlling (1002) to gate a first light source that is corresponding to the first pixel and that is in the first light source array (3021);
**characterised in that** the first pixel array (3011) comprises m first regions, wherein m is an integer greater than 1;
wherein a manner in which the pixels in each first region are arranged in a staggered manner is one of the following four manners:
the pixels in the first region are arranged in a staggered manner at an equal space in the row direction;
the pixels in the first region are arranged in a staggered manner at non-equal spaces in the row direction;
the pixels in the first region are arranged in a staggered manner at an equal space in the column direction; or
the pixels in the first region are arranged in a staggered manner at non-equal spaces in the column direction;
wherein pixels in at least two first regions are arranged in a different staggered manner of the four manners.

10. The method according to claim 9, wherein the method further comprises:
obtaining a first electrical signal from the first pixel, wherein the first electrical signal is determined by the first pixel based on a received first echo signal, and the first echo signal is obtained by a target in a detection region by reflecting a first signal light emitted by the first light source; and
determining correlative information of the target based on the first electrical signal.

11. The method according to claim 9 or 10, wherein the controlling to gate a first pixel in the first pixel array comprises:
obtaining a first control signal, wherein the first control signal is used to control to gate the first pixel and/or the first light source, and the first control signal is generated based on at least a target angular resolution; and
sending the first control signal to the pixel array (301) and/or the light source array (302).

12. The method according to any one of claims 9 to 11, wherein the method further comprises:
determining that a detection distance is less than a threshold, and extending point cloud information corresponding to the pixel to Q pieces, wherein Q is an integer greater than 1.

13. The method according to claim 12, wherein the determining that a detection distance is less than a threshold, and extending point cloud information corresponding to the pixel to Q pieces comprises:
controlling to gate a×b light-sensing units in a central region of the pixel, wherein the a×b light-sensing units are corresponding to one piece of first point cloud information, wherein a is less than p, and b is less than q; and
controlling to gate a light-sensing unit adjacent to at least one of the a×b light-sensing units, wherein the adjacent light-sensing unit outputs second point cloud information.

## Patentansprüche

1. Detektionssystem (300), umfassend ein Pixelarray (301) und ein Lichtquellenarray (302), wobei das Pixelarray (301) ein erstes Pixelarray (3011) umfasst, das erste Pixelarray (3011) M × N Pixel umfasst, das Lichtquellenarray (302) ein erstes Lichtquellenarray (3021) umfasst, das erste Lichtquellenarray (3021) M × N Lichtquellen umfasst, die den M × N Pixeln entsprechen, und sowohl M als auch N ganze Zahlen größer als 1 sind;
die Pixel in dem ersten Pixelarray (3011) auf gestaffelte Weise in einer Zeilenrichtung angeordnet sind und eine Staffelungsgröße der Pixel kleiner als ein Abstand zwischen Mittelpunkten zweier benachbarter Pixel in der Zeilenrichtung ist; oder die Pixel in dem ersten Pixelarray (3011) auf gestaffelte Weise in einer Spaltenrichtung angeordnet sind und eine Staffelungsgröße der Pixel kleiner als ein Abstand zwischen Mittelpunkten zweier benachbarter Pixel in der Spaltenrichtung ist; und
die Lichtquellen in dem ersten Lichtquellenarray (3021) auf die gleiche Weise wie die Pixel in dem ersten Pixelarray (3011) angeordnet sind;
**dadurch gekennzeichnet, dass** das erste Pixelarray (3011) m erste Gebiete umfasst, wobei m eine ganze Zahl größer als 1 ist;
wobei eine Weise, auf die die Pixel in jedem ersten Gebiet auf gestaffelte Weise angeordnet sind, eine der folgenden vier Weisen ist:
die Pixel in dem ersten Gebiet sind auf gestaffelte Weise mit einem gleichen Zwischenraum in der Zeilenrichtung angeordnet;
die Pixel in dem ersten Gebiet sind auf gestaffelte Weise mit ungleichen Zwischenräumen in der Zeilenrichtung angeordnet;
die Pixel in dem ersten Gebiet sind auf gestaffelte Weise mit einem gleichen Zwischenraum in der Spaltenrichtung angeordnet; oder
die Pixel in dem ersten Gebiet sind auf gestaffelte Weise mit ungleichen Zwischenräumen in der Spaltenrichtung angeordnet;
wobei Pixel in mindestens zwei ersten Gebieten von den m ersten Gebieten auf eine unterschiedliche gestaffelte Weise der vier Weisen angeordnet sind.

2. Detektionssystem (300) nach Anspruch 1, wobei das Pixel in dem Pixelarray (301) durch Binning von p × q Lichterfassungseinheiten erhalten wird, wobei p und q ganze Zahlen größer als oder gleich 1 sind;
wobei Signale, die durch alle Lichterfassungseinheiten in gebinnten Lichterfassungseinheiten erfasst werden, addiert und auf die Weise eines Pixels ausgelesen werden.

3. Detektionssystem (300) nach Anspruch 1 oder 2, wobei das erste Pixelarray (3011) n zweite Gebiete umfasst, es mindestens zwei zweite Gebiete in den n zweiten Gebieten gibt und Pixel in den mindestens zwei zweiten Gebieten jeweils durch Binning einer unterschiedlichen Anzahl von Lichterfassungseinheiten erhalten werden, wobei n eine ganze Zahl größer als 1 ist.

4. Detektionssystem (300) nach einem der Ansprüche 1 bis 3, wobei das erste Pixelarray (3011) h dritte Gebiete umfasst, es mindestens zwei dritte Gebiete in den h dritten Gebieten gibt und Pixel in den mindestens zwei dritten Gebieten jeweils eine unterschiedliche Staffelungsgröße aufweisen, wobei h eine ganze Zahl größer als 1 ist.

5. Detektionssystem (300) nach einem der Ansprüche 1 bis 4, wobei eine Lichtquelle in dem Lichtquellenarray (302) ein aktives Gebiet umfasst und das aktive Gebiet dazu ausgelegt ist, ein Signallicht auszusenden; und
das Lichtquellenarray (302) k Gebiete umfasst, es mindestens zwei Gebiete in den k Gebieten gibt und ein aktives Gebiet einer Lichtquelle in den mindestens zwei Gebieten jeweils eine unterschiedliche Position relativ zu der Lichtquelle aufweist, wobei k eine ganze Zahl größer als 1 ist.

6. Detektionssystem (300) nach einem der Ansprüche 1 bis 5, wobei das Detektionssystem (300) ferner ein optisches Bilderzeugungssystem umfasst; und
das Lichtquellenarray (302) sich auf einer Brennebene einer Bildseite des optischen Bilderzeugungssystems befindet und das Pixelarray (301) sich auf einer Brennebene einer Objektseite des optischen Bilderzeugungssystems befindet.

7. Detektionssystem (300) nach Anspruch 6, wobei ein Signallicht, das durch eine Lichtquelle in dem Lichtquellenarray (302) ausgesendet wird, unter Verwendung des optischen Bilderzeugungssystems auf ein Pixel abgebildet wird, das der Lichtquelle entspricht.

8. Endgerätevorrichtung (900), umfassend das Detektionssystem (901) nach einem der Ansprüche 1 bis 7.

9. Verfahren zum Steuern einer Detektion, angewendet auf ein Detektionssystem (300), wobei das Detektionssystem (300) ein Pixelarray (301) und ein Lichtquellenarray (302) umfasst, das Pixelarray (301) ein erstes Pixelarray (3011) umfasst, das erste Pixelarray (3011) M × N Pixel umfasst, das Lichtquellenarray (302) ein erstes Lichtquellenarray (3021) umfasst, das erste Lichtquellenarray (3021) M × N Lichtquellen umfasst, die den M × N Pixeln entsprechen, und sowohl M als auch N ganze Zahlen größer als 1 sind; die Pixel in dem ersten Pixelarray (3011) auf gestaffelte Weise in einer Zeilenrichtung angeordnet sind und eine Staffelungsgröße der Pixel kleiner als ein Abstand zwischen Mittelpunkten zweier benachbarter Pixel in der Zeilenrichtung ist; oder die Pixel in dem ersten Pixelarray (3011) auf gestaffelte Weise in einer Spaltenrichtung angeordnet sind und eine Staffelungsgröße der Pixel kleiner als ein Abstand zwischen Mittelpunkten zweier benachbarter Pixel in der Spaltenrichtung ist; die Lichtquellen in dem ersten Lichtquellenarray (3021) auf die gleiche Weise wie die Pixel in dem ersten Pixelarray (3011) angeordnet sind; und
das Verfahren Folgendes umfasst:
Steuern (1001), um ein erstes Pixel in dem ersten Pixelarray (3011) durchzuschalten, wobei das Pixel in dem ersten Pixelarray durch Binning von p × q Lichterfassungseinheiten erhalten wird, wobei sowohl p als auch q ganze Zahlen größer als 1 sind und wobei Signale, die durch alle Lichterfassungseinheiten in gebinnten Lichterfassungseinheiten erfasst werden, addiert und auf die Weise eines Pixels ausgelesen werden; und
Steuern (1002), um eine erste Lichtquelle durchzuschalten, die dem ersten Pixel entspricht und sich in dem ersten Lichtquellenarray (3021) befindet;
**dadurch gekennzeichnet, dass** das erste Pixelarray (3011) m erste Gebiete umfasst, wobei m eine ganze Zahl größer als 1 ist;
wobei eine Weise, auf die die Pixel in jedem ersten Gebiet auf gestaffelte Weise angeordnet sind, eine der folgenden vier Weisen ist:
die Pixel in dem ersten Gebiet sind auf gestaffelte Weise mit einem gleichen Zwischenraum in der Zeilenrichtung angeordnet;
die Pixel in dem ersten Gebiet sind auf gestaffelte Weise mit ungleichen Zwischenräumen in der Zeilenrichtung angeordnet;
die Pixel in dem ersten Gebiet sind auf gestaffelte Weise mit einem gleichen Zwischenraum in der Spaltenrichtung angeordnet; oder
die Pixel in dem ersten Gebiet sind auf gestaffelte Weise mit ungleichen Zwischenräumen in der Spaltenrichtung angeordnet;
wobei Pixel in mindestens zwei ersten Gebieten auf eine unterschiedliche gestaffelte Weise der vier Weisen angeordnet sind.

10. Verfahren nach Anspruch 9, wobei das Verfahren ferner Folgendes umfasst:
Erhalten eines ersten elektrischen Signals von dem ersten Pixel, wobei das erste elektrische Signal durch das erste Pixel basierend auf einem empfangenen ersten Echosignal bestimmt wird und das erste Echosignal durch ein Ziel in einem Detektionsgebiet durch Reflektieren eines ersten Signallichts, das durch die erste Lichtquelle emittiert wird, erhalten wird; und
Bestimmen korrelativer Informationen des Ziels basierend auf dem ersten elektrischen Signal.

11. Verfahren nach Anspruch 9 oder 10, wobei das Steuern, um ein erstes Pixel in dem ersten Pixelarray durchzuschalten, Folgendes umfasst:
Erhalten eines ersten Steuersignals, wobei das erste Steuersignal verwendet wird, um das Durchschalten des ersten Pixels und/oder der ersten Lichtquelle zu steuern, und das erste Steuersignal basierend auf zumindest einer Zielwinkelauflösung erzeugt wird; und
Senden des ersten Steuersignals an das Pixelarray (301) und/oder das Lichtquellenarray (302).

12. Verfahren nach einem der Ansprüche 9 bis 11, wobei das Verfahren ferner Folgendes umfasst:
Bestimmen, dass eine Detektionsdistanz kleiner als ein Schwellenwert ist, und Erweitern von Punktwolkeninformationen, die dem Pixel entsprechen, auf Q Stücke, wobei Q eine ganze Zahl größer als 1 ist.

13. Verfahren nach Anspruch 12, wobei das Bestimmen, dass eine Detektionsdistanz kleiner als ein Schwellenwert ist, und das Erweitern von Punktwolkeninformationen, die dem Pixel entsprechen, auf Q Stücke Folgendes umfasst:
Steuern, um a × b Lichterfassungseinheiten in einem zentralen Gebiet des Pixels durchzuschalten, wobei die a × b Lichterfassungseinheiten einem Stück erster Punktwolkeninformationen entsprechen, wobei a kleiner als p ist und b kleiner als q ist; und
Steuern, um eine Lichterfassungseinheit, die zu mindestens einer der a × b Lichterfassungseinheiten benachbart ist, durchzuschalten, wobei die benachbarte Lichterfassungseinheit zweite Punktwolkeninformationen ausgibt.

## Revendications

1. Système de détection (300), comprenant une matrice de pixels (301) et une matrice de sources de lumière (302), dans lequel la matrice de pixels (301) comprend une première matrice de pixels (3011), la première matrice de pixels (3011) comprend M × N pixels, la matrice de sources de lumière (302) comprend une première matrice de sources de lumière (3021), la première matrice de sources de lumière (3021) comprendM × Nsources de lumière correspondant aux M × Npixels, et M et N étant tous deux des entiers supérieurs à 1 ;
les pixels dans la première matrice de pixels (3011) sont agencés en quinconce dans une direction des lignes, et une taille de décalage des pixels est inférieure à une distance entre des centres de deux pixels adjacents dans la direction des lignes ; ou les pixels dans la première matrice de pixels (3011) sont agencés en quinconce dans une direction des colonnes, et une taille de décalage des pixels est inférieure à une distance entre des centres de deux pixels adjacents dans la direction des colonnes ; et
les sources de lumière dans la première matrice de sources de lumière (3021) sont agencées de la même manière que les pixels dans la première matrice de pixels (3011) ;
**caractérisé en ce que** la première matrice de pixels (3011) comprend m premières régions, m étant un entier supérieur à 1 ;
dans lequel une manière dont les pixels dans chaque première région sont agencés en quinconce est l'une des quatre manières suivantes :
les pixels dans la première région sont agencés en quinconce selon un espacement égal dans la direction des lignes ;
les pixels dans la première région sont agencés en quinconce selon des espacements non égaux dans la direction des lignes ;
les pixels dans la première région sont agencés en quinconce selon un espacement égal dans la direction des colonnes ; ou
les pixels dans la première région sont agencés en quinconce selon des espacements non égaux dans la direction des colonnes ;
dans lequel les pixels dans au moins deux premières régions parmi les m premières régions sont agencés selon une manière d'agencement en quinconce différente parmi les quatre manières.

2. Système de détection (300) selon la revendication 1, dans lequel le pixel dans la matrice de pixels (301) est obtenu par regroupement de pxq unités de détection de lumière, p et q étant des entiers supérieurs ou égaux à 1 ;
dans lequel des signaux détectés par toutes les unités de détection de lumière dans des unités de détection de lumière regroupées sont additionnés et lus à la manière d'un pixel.

3. Système de détection (300) selon la revendication 1 ou 2, dans lequel la première matrice de pixels (3011) comprend n deuxièmes régions, au moins deux deuxièmes régions sont présentes parmi les n deuxièmes régions, et des pixels dans au moins deux deuxièmes régions sont chacun obtenus par regroupement d'une quantité différente d'unités de détection de lumière, n étant un entier supérieur à 1.

4. Système de détection (300) selon l'une quelconque des revendications 1 à 3, dans lequel la première matrice de pixels (3011) comprend h troisièmes régions, au moins deux troisièmes régions sont présentes parmi les h troisièmes régions, et les pixels dans lesdites au moins deux troisièmes régions ont chacun une taille de décalage différente, h étant un entier supérieur à 1.

5. Système de détection (300) selon l'une quelconque des revendications 1 à 4, dans lequel une source de lumière dans la matrice de sources de lumière (302) comprend une région active, et la région active est configurée pour émettre une lumière de signal ; et
la matrice de sources de lumière (302) comprend k régions, au moins deux régions sont présentes parmi les k régions, et une région active d'une source de lumière dans les au moins deux régions a chacune une position différente par rapport à la source de lumière, k étant un entier supérieur à 1.

6. Système de détection (300) selon l'une quelconque des revendications 1 à 5, le système (300) comprenant en outre un système optique de formation d'image ; et
la matrice de sources de lumière (302) est située sur un plan focal d'un côté image du système optique de formation d'image, et la matrice de pixels (301) est située sur un plan focal d'un côté objet du système optique de formation d'image.

7. Système de détection (300) selon la revendication 6, dans lequel une lumière de signal transmise par une source de lumière dans la matrice de sources de lumière (302) est imagée, au moyen du système optique de formation d'image, sur un pixel correspondant à la source de lumière.

8. Dispositif terminal (900), comprenant le système de détection (901) selon l'une quelconque des revendications 1 à 7.

9. Procédé de commande de détection, appliqué à un système de détection (300), dans lequel le système de détection (300) comprend une matrice de pixels (301) et une matrice de sources de lumière (302), la matrice de pixels (301) comprend une première matrice de pixels (3011), la première matrice de pixels (3011) comprend M × N pixels, la matrice de sources de lumière (302) comprend une première matrice de sources de lumière (3021), la première matrice de sources de lumière (3021) comprend M × N sources de lumière correspondant aux M × N pixels, et M et N sont tous deux des entiers supérieurs à 1 ; les pixels dans la première matrice de pixels (3011) sont agencés en quinconce dans une direction des lignes, et une taille de décalage des pixels est inférieure à une distance entre des centres de deux pixels adjacents dans la direction des lignes ; ou les pixels dans la première matrice de pixels (3011) sont agencés en quinconce dans une direction des colonnes, et une taille de décalage des pixels est inférieure à une distance entre des centres de deux pixels adjacents dans la direction des colonnes ; les sources de lumière dans la première matrice de sources de lumière (3021) sont agencées de la même manière que les pixels dans la première matrice de pixels (3011) ; et
le procédé comprend :
la commande (1001) de la sélection d'un premier pixel dans la première matrice de pixels (3011), le pixel dans la première matrice de pixels étant obtenu par regroupement de pxq unités de détection de lumière, p et q étant tous deux des entiers supérieurs à 1, et des signaux détectés par toutes les unités de détection de lumière parmi des unités de détection de lumière regroupées étant additionnés et lus à la manière d'un pixel ; et
la commande (1002) de la sélection d'une première source de lumière correspond au premier pixel et est située dans la première matrice de sources de lumière (3021) ;
**caractérisé en ce que** la première matrice de pixels (3011) comprend m premières régions, m étant un entier supérieur à 1 ;
dans lequel une manière dont les pixels dans chaque première région sont agencés en quinconce est l'une des quatre manières suivantes :
les pixels dans la première région sont agencés en quinconce selon un espacement égal dans la direction des lignes ;
les pixels dans la première région sont agencés en quinconce selon des espacements non égaux dans la direction des lignes ;
les pixels dans la première région sont agencés en quinconce selon un espacement égal dans la direction des colonnes ; ou
les pixels dans la première région sont agencés en quinconce selon des espacements non égaux dans la direction des colonnes ;
dans lequel des pixels dans au moins deux premières régions sont agencés selon une manière d'agencement en quinconce différente parmi les quatre manières.

10. Procédé selon la revendication 9, le procédé comprenant en outre :
l'obtention d'un premier signal électrique à partir du premier pixel, le premier signal électrique étant déterminé par le premier pixel sur la base d'un premier signal d'écho reçu, et le premier signal d'écho étant obtenu par la réflexion, par une cible dans une région de détection, d'une première lumière de signal émise par la première source de lumière ; et
la détermination d'informations de corrélation de la cible sur la base du premier signal électrique.

11. Procédé selon la revendication 9 ou 10, dans lequel la commande de la sélection d'un premier pixel dans la première matrice de pixels comprend :
l'obtention d'un premier signal de commande, le premier signal de commande étant utilisé pour commander la sélection du premier pixel et/ou de la première source de lumière, et le premier signal de commande étant généré sur la base d'au moins une résolution angulaire cible ; et
l'envoi du premier signal de commande à la matrice de pixels (301) et/ou à la matrice de sources de lumière (302).

12. Procédé selon l'une quelconque des revendications 9 à 11, le procédé comprenant en outre :
la détermination du fait qu'une distance de détection est inférieure à un seuil, et l'extension à Q éléments des informations de nuage de points correspondant au pixel, Q étant un entier supérieur à 1.

13. Procédé selon la revendication 12, dans lequel la détermination du fait qu'une distance de détection est inférieure à un seuil, et l'extension à Q éléments d'informations de nuage de points correspondant au pixel comprend :
la commande de la sélection de a × b unités de détection de lumière dans une région centrale du pixel, les a × b unités de détection de lumière correspondant à un élément de premières informations de nuage de points, a étant inférieur à p et b étant inférieur à q ; et
la commande de la sélection d'une unité de détection de lumière adjacente à au moins l'une des a × b unités de détection de lumière, l'unité de détection de lumière adjacente délivrant des deuxièmes informations de nuage de points.
